(19)

Europäisches
Patentamt
European
Patent Office
Office européen
des brevets

(11) **EP 2 204 933 A1**

(12) **EUROPEAN PATENT APPLICATION**
published in accordance with Art. 153(4) EPC

(43) Date of publication:
    **07.07.2010 Bulletin 2010/27**

(21) Application number: **08829389.9**

(22) Date of filing: **05.09.2008**

(51) Int Cl.:
    **H04J 11/00** *(2006.01)*    **H04B 1/69** *(2006.01)*

(86) International application number:
    **PCT/JP2008/066069**

(87) International publication number:
    **WO 2009/031649 (12.03.2009 Gazette 2009/11)**

(84) Designated Contracting States:
    **AT BE BG CH CY CZ DE DK EE ES FI FR GB GR
    HR HU IE IS IT LI LT LU LV MC MT NL NO PL PT
    RO SE SI SK TR**
    Designated Extension States:
    **AL BA MK RS**

(30) Priority: **05.09.2007 JP 2007230589**

(71) Applicant: **Sharp Kabushiki Kaisha
    Osaka-shi, Osaka 545-8522 (JP)**

(72) Inventors:
    • **SHIMEZAWA, Kazuyuki**
      **Osaka 545-8522 (JP)**
    • **YOSHIMOTO, Takashi**
      **Osaka 545-8522 (JP)**
    • **YAMADA, Ryota**
      **Osaka 545-8522 (JP)**

(74) Representative: **Müller - Hoffmann & Partner
    Patentanwälte
    Innere Wiener Strasse 17
    81667 München (DE)**

(54) **RECEPTION DEVICE AND RECEPTION METHOD**

(57)    A receiver includes a propagation path estimation unit which produces a channel impulse response estimation value from a received signal, a replica signal creation unit which creates a replica signal as a replica of a transmitted signal based on the received signal, a time period setting unit which sets time periods into which the channel impulse response estimation value is divided, a received signal extraction unit which extracts received signals of the time periods set by the time period setting unit using the replica signal created by the replica signal creation unit, a combining unit which iterates a process for combining the signals of the time periods extracted by the received signal extraction unit, and a demodulation processing unit which performs a demodulation process for the signals combined by the combining unit. The number of time periods set in at least one iterative process is different.

FIG. 1

**Description**

TECHNICAL FIELD

The present invention relates to a receiver and a reception method, and more particularly to a receiver, which transmits/receives a signal by a multi-carrier system, and a reception method.
The present application claims priority on Japanese Patent Application JP 2007-230589 filed at the Japanese Patent Office on September 5, 2007, the entire contents thereof being incorporated herein by reference.

BACKGROUND ART

When an arrival wave exceeding a GI (Guard Interval) interval exists in multi-carrier transmission, ISI (Inter Symbol Interference) is caused by a previous symbol inserted into an FFT (Fast Fourier Transform) interval, and ICI (Inter Carrier Interference) is caused by a break in a symbol, that is, a discontinuous interval in a signal, which is included in the FFT interval.

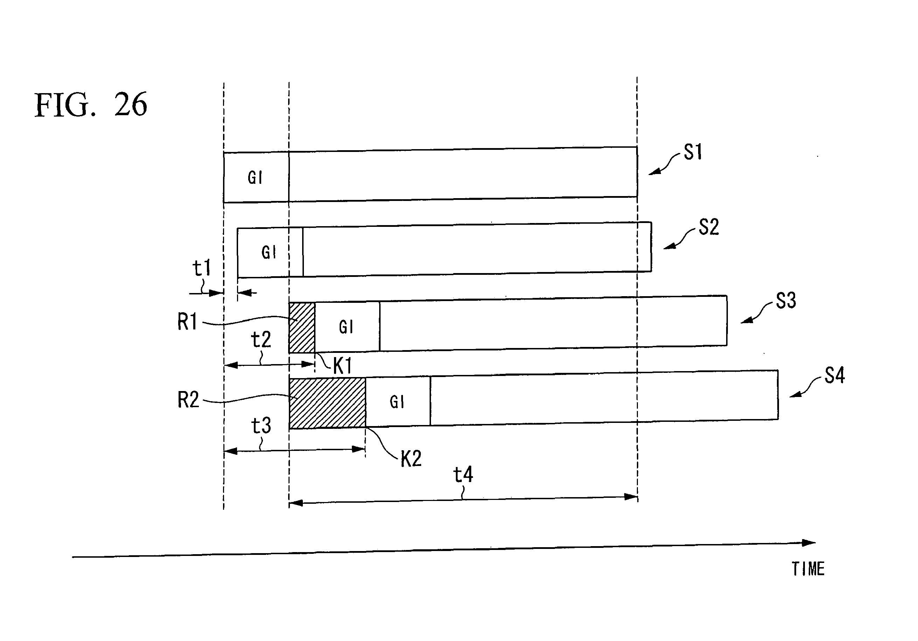

FIG. 26 is a diagram showing a signal reaching from a transmitter to a receiver through a multipath environment. In FIG. 26, the horizontal axis represents time. Symbols S1 to S4 denote signals reaching from the transmitter to the receiver through the multipath environment, and reach the receiver through 4 multipaths. A guard interval (GI) which is a copy of a latter part of a symbol is added in front of the symbols S1 to S4.
It can be seen that the first signal S1 from the top of FIG. 26 is an arrival wave which has first reached from the transmitter to the receiver, and the second signal S2 therefrom is an arrival wave having a delay t1 occurring in the signal S 1 within the guard interval (GI). The signals S3 and S4 are third and fourth arrival waves from the top of FIG. 26, which have delays t2 and t3 occurring in the signal S1. In terms of the signals S3 and S4, the delays exceed the guard interval (GI).
Shaded portions R1 and R2 in front of the third and fourth arrival wave signals S3 and S4 are portions where a symbol before a desired symbol is included in an FFT interval of the desired symbol. Interval t4 represents the FFT interval of the desired symbol, and the shaded portions R1 and R2 become the above-described ISI components. Since the ISI components are interference components, the ISI components result in characteristics degradation upon demodulation. In the third and fourth arrival wave signals S3 and S4, breaks K1 and K2 are included in the symbols in interval t4 and become the cause of the above-described ICI.

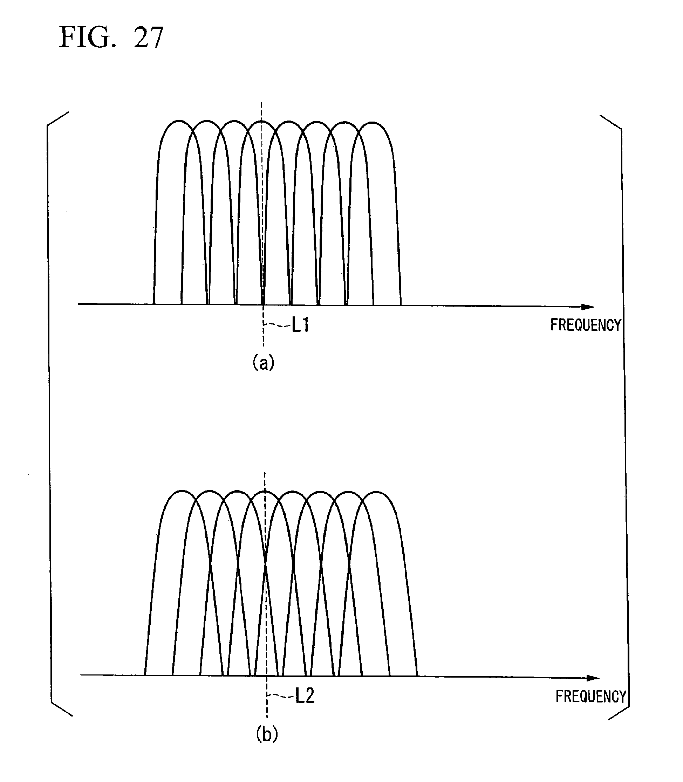

FIGS. 27(a) and 27(b) show the form in which sub-carriers are orthogonal to each other and the form in which inter-subcarrier interference is caused by the ICI. In FIGS. 27(a) and 27(b), the horizontal axis represents frequency. FIG 27(a) shows the form in which no ICI occurs among 8 sub-carriers and no inter-subcarrier interference occurs. FIG. 27(b) shows the form in which the inter-subcarrier interference is caused by the ICI.
When observing a dotted-line portion L1 as shown in FIG. 27(a) in the case where an arrival wave exceeding the guard interval (GI) does not exist, it is the state in which one certain sub-carrier component is included at its frequency and no other sub-carrier component is included. This state is that in which orthogonality is maintained between sub-carriers. In this state, a demodulation operation is performed in general multi-carrier communication.
On the other hand, when observing a dotted-line portion L2 as shown in FIG. 27(b) in the case where an arrival wave exceeding the guard interval (GI) exists, an adj acent sub-carrier component as well as a desired sub-carrier is included at its frequency and has interference. This state is that in which orthogonality is not maintained between sub-carriers. The ICI component becomes the cause of the characteristics degradation.
A technique for improving the characteristics degradation by ISI and ICI in the above-described case where an arrival wave exceeding the guard interval (GI) exists has been proposed in the following Patent Document 1. In this technique, a replica signal of an undesired sub-carrier including the above-described ISI component and the above-described ICI component is created using an error correction result (an output of a MAP decoder) after one demodulation operation is performed. The characteristics of the ISI and ICI are improved by performing a second demodulation operation on the result obtained by removing the replica signal from a received signal.
On the other hand, an MC-CDM (Multi Carrier-Code Division Multiplexing) system, an MC-CDMA (Multi Carrier-Code Division Multiple Access) system, a Spread-OFCDM (Orthogonal Frequency and Code Division Multiplexing) system, and the like have been proposed as a combination of a multi-carrier transmission system and a CDM (Code Division Multiplexing) system.

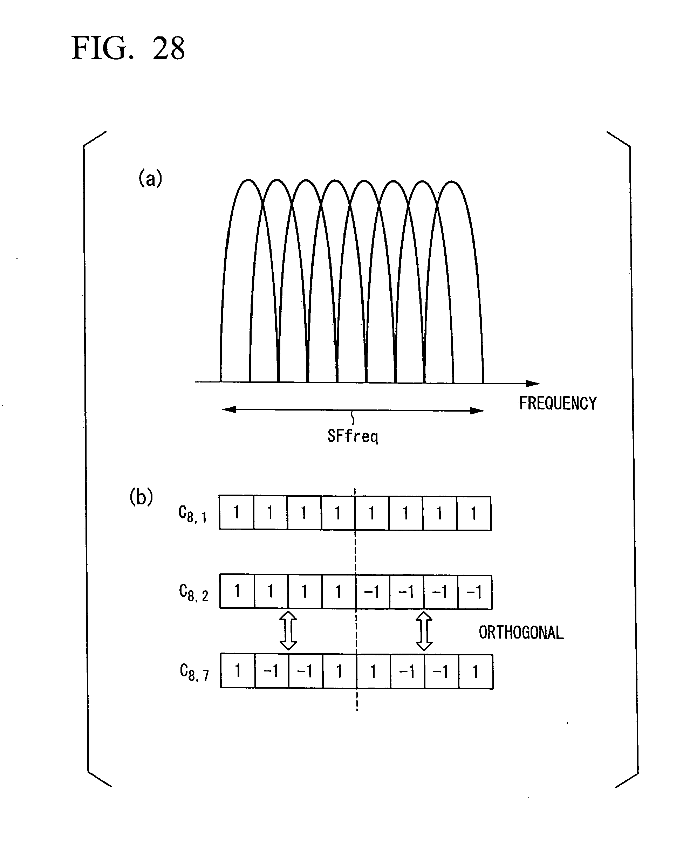

FIGS. 28(a) and 28(b) are diagrams showing the relationship of sub-carriers and orthogonal codes corresponding to the sub-carriers in the MC-CDM system. In FIGS. 28(a) and 28(b), the horizontal axis represents frequency. FIG. 28(a) shows 8 sub-carriers in the MC-CDM system as an example. FIG. 28(b) shows $C_{8,1}$, $C_{8,2}$, and $C_{8,7}$ as three types of orthogonal codes corresponding to the sub-carriers. Here, $C_{8,1} = (1,1,1,1,1,1,1,1)$, $C_{8,2}=(1,1,1,1,-1,-1,-1,-1)$, and $C_{8,7}=(1,-1,-1,1,1,-1,-1,1)$.
As one feature of the MC-CDM system, it is possible to code-multiplex and communicate three data series using the same time and the same frequency by multiplying data by the three types of orthogonal codes.

All the three types of orthogonal codes of $C_{8,1}$, $C_{8,2}$, and $C_{8,7}$, are orthogonal codes having a cycle of 8. It is possible to separate data between orthogonal codes by performing an adding operation during one cycle. In FIG. 28(a), SFfreq represents the cycle of the orthogonal codes $C_{8,1}$, $C_{8,2}$, and $C_{8,7}$.

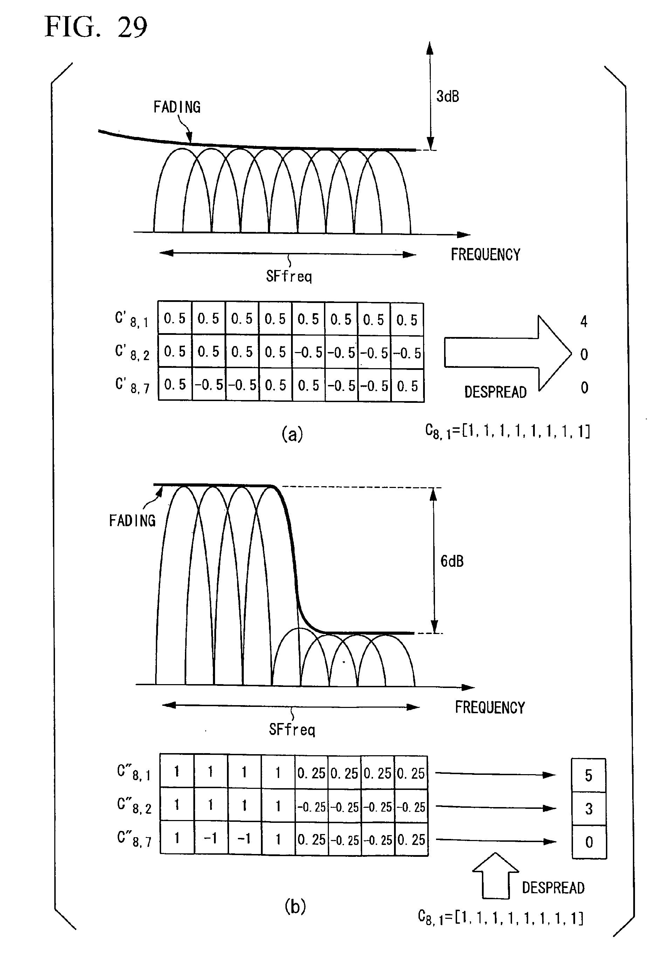

FIGS. 29(a) and 29(b) are diagrams showing the form of codes when a signal of the MC-CDM system is propagated in the air and is received by a receiver. In FIGS. 29(a) and 29(b), the horizontal axis represents frequency. FIG. 29(a) shows codes $C'_{8,1}$, $C'_{8,2}$, and $C'_{8,7}$ received by the receiver. FIG. 29(b) shows codes $C''_{8,1}$, $C''_{8,2}$, and $C''_{8,7}$ received by the receiver.

FIG. 29(a) shows the case where no frequency change exists in a cycle SFfreq of orthogonal codes. In this case, a despreading operation is performed by $C_{8,1}$, that is, an inner product with $C_{8,1}$ is taken. When adding all values within SFfreq, $C'_{8,1}$ becomes 4 and $C'_{8,2}$ and $C'_{8,7}$ become 0. This situation means that orthogonality is maintained between codes.

On the other hand, when a despreading operation is performed by $C_{8,1}$ in the case where a frequency change of 6 dB exists during the cycle SFfreq of orthogonal codes as shown in FIG. 29(b), that is, in the case where a frequency change exists during the cycle of orthogonal codes, $C''_{8,1}$ becomes 5, $C''_{8,2}$ becomes 3, and $C''_{8,7}$ becomes 0. That is, an interference component exists between $C''_{8,1}$ and $C''_{8,2}$, and hence the orthogonality between codes is not maintained.

When a frequency change of a propagation path is fast as described above (a change is fast in a frequency direction), inter-code interference (multi-code interference) becomes the cause of the characteristics degradation in the MC-CDM system.

Techniques for improving the characteristics degradation by the collapse of orthogonality between codes are disclosed in Patent Document 2 and Non-Patent Document 1. In these techniques, there is a difference between downlink and uplink, but the improvement of characteristics is promoted by removing an undesired code signal using data after an error correction operation or a despreading operation to remove inter-code interference by code multiplexing upon MC-CDM communication in both the downlink and the uplink.

Patent Document 1: Japanese Patent Application, First Publication No. 2004-221702

Patent Document 2: Japanese Patent Application, First Publication No. 2005-198223

Non-Patent Document 1: Y. Zhou, J. Wang, and M. Sawahashi, "Downlink Transmission of Broadband OFCDM Systems- Part I: Hybrid Detection", IEEE Transaction on Communication, Vol. 53, Issue 4, pp. 718 to 729, April 2005.

DISCLOSURE OF INVENTION

Problem to be Solved by the Invention

However, the above-described related art has a problem in that a computational amount is increased when a receiver demodulates a multi-carrier signal and an MC-CDM signal of which the number of sub-carriers is large. In addition, there is a problem in that a computational amount is increased by the number of code multiplexes when a receiver removes inter-code interference upon MC-CDM.

The present invention has been made in view of the above circumstances, and an object of the invention is to provide a receiver and a reception method capable of reducing a computational amount when the receiver demodulates a signal received from a transmitter.

Means for Solving the Problem

(1) The present invention has been made to solve the above-described problems. According to an aspect of the present invention, there is provided a receiver including: a propagation path estimation unit which produces a channel impulse response estimation value from a received signal; a replica signal creation unit which creates a replica signal as a replica of a transmitted signal based on the received signal; a time period setting unit which sets time periods into which a channel impulse response estimation value is divided; a received signal extraction unit which extracts received signals of the time periods set by the time period setting unit using the replica signal created by the replica signal creation unit; a combining unit which iterates a process for combining the signals of the time periods extracted by the received signal extraction unit; and a demodulation processing unit which performs a demodulation process for the signals combined by the combining unit, wherein the number of time periods set in at least one iterative process is different.

In the present invention, a time period division unit divides a received signal received by the receiver from a transmitter into at least one time period, thereby reducing or suppressing ISI or ICI. Simultaneously, MCI can be reduced by decreasing delay spread in each time period and a computational amount can be reduced when the receiver demodulates a signal received from the transmitter.

(2) According to the aspect of the present invention, the received signal extraction unit includes: an arrival wave replica generation unit which generates a replica of an arrival wave of each time period based on the channel impulse response estimation value as a propagation path of the received signal, the replica signal created by the replica signal creation unit, and the time periods set by the time period setting unit; and a subtraction unit which extracts a received signal of a time period set by the time period setting unit by subtracting the replica of the arrival wave of each time period generated by the arrival wave replica generation unit from the received signal.

(3) According to the aspect of the present invention, the time period setting unit sets the number of time periods to be invariable or increased as the number of iterative processes is increased.

(4) According to the aspect of the present invention, the time period setting unit sets the number of time periods based on the channel impulse response estimation value.

(5) According to the aspect of the present invention, the time period setting unit sets the number of time periods to be adaptive for every iterative process.

(6) According to the aspect of the present invention, the time period setting unit sets the number of time periods based on a likelihood of the replica signal created by the replica signal creation unit.

(7) According to the aspect of the present invention, the time period setting unit sets the number of time periods based on reliability information of the replica signal created by the replica signal creation unit.

(8) According to the aspect of the present invention, the reliability information is a division error produced from the replica signal created by the replica signal creation unit, the channel impulse response estimation value, and the received signal.

(9) According to the aspect of the present invention, the time period setting unit sets the number of time periods based on the division error and a division gain.

(10) According to the aspect of the present invention, the division gain is determined based on at least one of inter-symbol interference, inter-subcarrier interference, and a path diversity gain.

(11) According to the aspect of the present invention, the receiver may further include a despreading unit which separates a code multiplexed signal, wherein the division gain is determined based on at least one of inter-code interference, inter-symbol interference, inter-subcarrier interference, and a path diversity gain.

(12) According to another aspect of the present invention, there is provided a reception method including: a propagation path estimation step in which a channel impulse response estimation value is produced from a received signal; a replica signal creation step in which a replica signal is created as a replica of a transmitted signal based on the received signal; a time period setting step in which time periods into which the channel impulse response estimation value is divided are set; a received signal extraction step in which received signals of the time periods set by the time period setting step are extracted using the replica signal created by the replica signal creation step; a combining step in which a process for combining the signals of the time periods extracted by the received signal extraction step is iterated; and a demodulation processing step in which a demodulation process for the signals combined by the combining step is executed, wherein the number of time periods set in at least one iterative process is different.

Effect of the Invention

The receiver and the reception method of the present invention can reduce the computation amount when the receiver demodulates a signal received from a transmitter.

BRIEF DESCRIPTION OF THE DRAWINGS

FIG. 1 is a schematic block diagram showing a part of the configuration of a transmitter 100 according to a first embodiment of the present invention.
FIG. 2 is a diagram showing an example of a frame format according to the first embodiment of the present invention.
FIG. 3 is a schematic block diagram showing a part of the configuration of a receiver 200 according to the first embodiment of the present invention.
FIG. 4 is a schematic block diagram showing an example of the configuration of a signal detection unit 23 (FIG. 3) according to the first embodiment of the present invention.
FIG. 5 is a diagram showing an example of the configuration of a block division unit 82 (FIG. 4) according to the first embodiment of the present invention.
FIG. 6 is a flowchart showing an example of the operation of the receiver 200 (FIG. 3) according to the first embodiment of the present invention.
FIG. 7 is a diagram showing a channel impulse response estimation value according to the first embodiment of the present invention.
FIG. 8 is a diagram showing a channel impulse response estimation value in an arrival wave removal unit 45-1 according to the first embodiment of the present invention.
FIG. 9 is a diagram showing a channel impulse response estimation value in an arrival wave removal unit 45-2 according to the first embodiment of the present invention.
FIG. 10 is a diagram showing a channel impulse response estimation value in an arrival wave removal unit 45-3 according to the first embodiment of the present invention.
FIG. 11 is a diagram showing a channel impulse response estimation value and a combining unit 46 in a first round process according to the first embodiment of the present invention.
FIG. 12 is a diagram showing a channel impulse response estimation value and the combining unit 46 in a first round process according to the first embodiment of the present invention.
FIG. 13 is a diagram showing the configuration of a propagation path/noise power estimation unit 22 (FIG. 3) according to the first embodiment of the present invention.
FIG. 14 is a diagram illustrating a process of a block division setting unit 81 (FIG. 4) according to the first embodiment of the present invention.
FIG. 15 is a diagram illustrating effects according to the first embodiment of the present invention.
FIG. 16 is a diagram illustrating effects according to the first embodiment of the present invention.
FIG. 17 is a graph showing the relationship of the number of divisions and characteristics according to the first embodiment of the present invention.
FIG. 18 is a graph showing characteristics when the number of block divisions has been fixed for all iterative processes.
FIG. 19 is a graph showing an example of the improvement of characteristics when the number of block divisions has been set to be different.
FIG. 20 is a graph showing an example of evaluation results by computer simulation when a reception method is used according to the first embodiment of the present invention.
FIG. 21 is a table showing the relationship of the number of block divisions and the number of iterative processes set by the computer simulation of FIG. 20.

FIG. 22 is a table showing main simulation parameters using the computer simulation of FIG. 20.

FIG. 23 is a schematic block diagram showing the configuration of a signal detection unit 90 of a receiver according to a second embodiment of the present invention.

FIG. 24 is a diagram illustrating effects according to the second embodiment of the present invention.

FIG. 25 is a diagram showing an example of a method of setting the number of block divisions according to a third embodiment of the present invention.

FIG. 26 is a diagram showing a signal reaching from a transmitter to a receiver through a multipath environment.

FIG. 27 is a diagram showing the form in which sub-carriers are orthogonal to each other and the form in which inter-subcarrier interference is caused by ICI.

FIG. 28 is a diagram showing the relationship of sub-carriers and orthogonal codes corresponding to the sub-carriers in an MC-CDM system.

FIG. 29 is a diagram showing the form of codes when a signal of the MC-CDM system is propagated in the air and is received by a receiver.

Reference Symbols

1: S/P CONVERSION UNIT
2-1 TO 2-4: PER-CODE SIGNAL PROCESSING UNIT
3: ERROR CORRECTION CODING UNIT
4: BIT INTERLEAVER UNIT
5: MODULATION UNIT
6: SYMBOL INTERLEAVER UNIT
7: FREQUENCY-TIME SPREADING UNIT
8: DTCH MULTIPLEXING UNIT
9: PICH MULTIPLEXING UNIT
10: SCRAMBLING UNIT
11: IFFT UNIT
12: GI INSERTION UNIT
21: SYMBOL SYNCHRONIZATION UNIT
22: PROPAGATION PATH/NOISE POWER ESTIMATION UNIT
23: SIGNAL DETECTION UNIT
24-1 TO 24-4: PER-CODE DECODING UNIT
25: BIT DEINTERLEAVER UNIT
26: ERROR CORRECTION DECODING UNIT
27: ADDITION UNIT
28: REPLICA SIGNAL GENERATION UNIT
29-1 TO 29-4: PER-CODE SYMBOL GENERATION UNIT
30: BIT INTERLEAVER UNIT
31: SYMBOL GENERATION UNIT
32: SYMBOL INTERLEAVER UNIT
33: FREQUENCY-TIME SPREADING UNIT
34: DTCH MULTIPLEXING UNIT
3 5 : PICH MULTIPLEXING UNIT
36: SCRAMBLING UNIT
37: IFFT UNIT
38: GI INSERTION UNIT
39: P/S CONVERSION UNIT
41: ARRIVAL WAVE REPLICA GENERATION UNIT
42: SUBTRACTION UNIT
43: GI REMOVAL UNIT
44: FFT UNIT
45-1 TO 45-B: ARRIVAL WAVE REMOVAL UNIT
46: COMBINING UNIT
47-1 TO 47-4: PER-CODE DEMODULATION UNIT
48: DESPREADING UNIT

49: SYMBOL DEINTERLEAVER UNIT
50: DEMODULATION UNIT
61: PROPAGATION PATH ESTIMATION UNIT
62: PREAMBLE REPLICA GENERATION UNIT
63: NOISE POWER ESTIMATION UNIT
70: MAC UNIT
71: FILTERING PROCESSING UNIT
72: D/A CONVERSION UNIT
73: FREQUENCY CONVERSION UNIT
74: TRANSMISSION ANTENNA
75: RECEPTION ANTENNA
76: FREQUENCY CONVERSION UNIT
77: A/D CONVERSION UNIT
81: BLOCK DIVISION SETTING UNIT
82: BLOCK DIVISION UNIT
90: SIGNAL DETECTION UNIT
91: BLOCK DIVISION SETTING UNIT
100: TRANSMITTER
200: RECEIVER

BEST MODE FOR CARRYING OUT THE INVENTION

Hereinafter, first to third embodiments of the present invention will be described with reference to the drawings. First, the first embodiment of the present invention will be described.

(First Embodiment)

In this embodiment, a receiver capable of obtaining good characteristics when ISI and ICI caused by an arrival wave exceeding a guard interval or inter-code interference caused by frequency selectivity of a propagation path exist will be described.

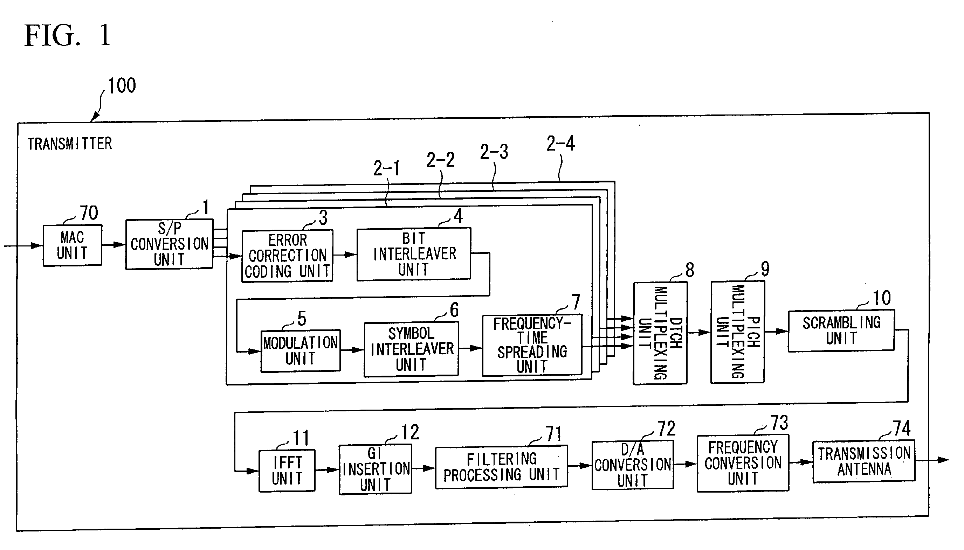

FIG. 1 is a schematic block diagram showing a part of the configuration of a transmitter 100 according to the first embodiment of the present invention. The transmitter 100 includes a MAC (Media Access Control) unit 70, a S/P (Serial/Parallel) conversion unit 1, per-code signal processing units 2-1 to 2-4, a DTCH (Data Traffic Channel) multiplexing unit 8, a PICH (Pilot Channel) multiplexing unit 9, a scrambling unit 10, an IFFT (Inverse Fast Fourier Transform) unit 11, a GI insertion unit 12, a filtering processing unit 71, a D/A (Digital/Analog) conversion unit 72, a frequency conversion unit 73, and a transmission antenna 74.

Each of the per-code signal processing units 2-1 to 2-4 includes an error correction coding unit 3, a bit interleaver unit 4, a modulation unit 5, a symbol interleaver unit 6, and a frequency-time spreading unit 7. An information signal output from the MAC unit 70 is input to the S/P conversion unit 1 and S/P conversion outputs of the S/P conversion unit 1 are input to the per-code signal processing units 2-1 to 2-4. Since the per-code signal processing units 2-2 to 2-4 have the same configuration as the per-code signal processing unit 2-1, description thereof is omitted.

The error correction coding unit 3 executes one error correction coding process of a turbo coding process, an LDPC (Low Density Parity Check) coding process, and a convolutional coding process for a signal input to the per-code signal processing unit 2-1. The bit interleaver unit 4 outputs bits by performing the order rearrangement of each bit in an appropriate sequence for an output of the error correction coding unit 3 so as to improve the occurrence of burst error by the drop of reception power by frequency-selectivity fading.

The modulation unit 5 executes a symbol modulation process such as BPSK (Binary Phase Shift Keying), QPSK (Quadrature Phase Shift Keying), 16QAM (16 Quadrature Amplitude Modulation), or 64QAM (64 Quadrature Amplitude Modulation) for the output of the bit interleaver unit 4.

The symbol interleaver unit 6 performs the order rearrangement of each symbol in an appropriate sequence for an output of the modulation unit 5 so as to improve burst errors. The frequency-time spreading unit 7 spreads an output of the symbol interleaver unit 6 by a predetermined spreading code (channelization code). Here, OVSF (Orthogonal Variable Spread Factor) codes are used. Alternatively, other spreading codes may be used.

The transmitter 100 has the per-code signal processing units 2-1 to 2-4 whose number is the number of code multiplexes $C_{mux}$ ($C_{mux}$ is a natural number equal to or greater than 1). Here, for example, the case where $C_{mux}=4$ is shown. Spread signals by different spreading codes as outputs of the per-code signal processing units are output to the DTCH multiplexing unit 8 and are multiplexed (added) by the DTCH multiplexing unit 8. Subsequently, in the PICH multiplexing unit 9, a pilot channel (PICH) to be used for propagation path estimation or the like is inserted into a predetermined position.

Thereafter, the scrambling unit 10 executes a scrambling process by a base station-specific scrambling code and then the IFFT unit 11 executes a frequency-time conversion process. After the GI insertion unit 12 inserts a guard interval (GI), a filtering process by the filtering unit 71, a digital-to-analog conversion process by the D/A conversion unit 72, a frequency conversion process into a radio frequency by the frequency conversion unit 73, and the like are executed and then a signal transmitted from the transmission antenna 74 is transmitted to the receiver.

In FIG. 1, both the bit interleaver unit 4 and the symbol interleaver unit 6 are arranged in the per-code signal processing units 2-1 to 2-4, but either may be arranged. Both the bit interleaver unit 4 and the symbol interleaver unit 6 may not be arranged in the per-code signal processing units 2-1 to 2-4.

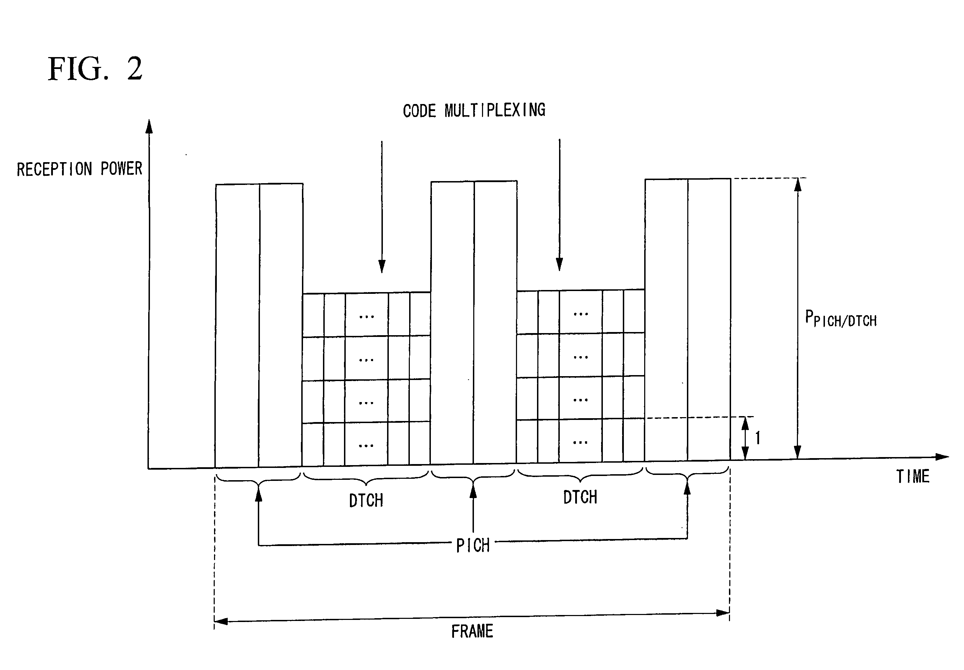

FIG. 2 is a diagram showing a frame format according to the first embodiment of the present invention. This figure shows the format of a frame transmitted from the transmitter 100 (see FIG. 1) to the receiver. In FIG. 2, the horizontal axis represents time and the vertical axis represents reception power. As shown in FIG. 2, a pilot channel (PICH) is arranged in front, rear, and center portions of one frame. A data traffic channel (DTCH) used for data transmission is arranged in a first half portion and a second half portion of the frame. A signal spread by $C_{mux}$ different spreading codes is code-multiplexed.

Here, the case where $C_{mux}=4$ is schematically shown in the form of 4 data layers. The ratio of the reception power of the pilot channel (PICH) and the reception power per code of the data traffic channel (DTCH) is denoted by $P_{PICH/DTCH}$. In FIG. 2, time multiplexing is executed in terms of a method of inserting the pilot channel (PICH), but frequency multiplexing or frequency-time multiplexing may be executed.

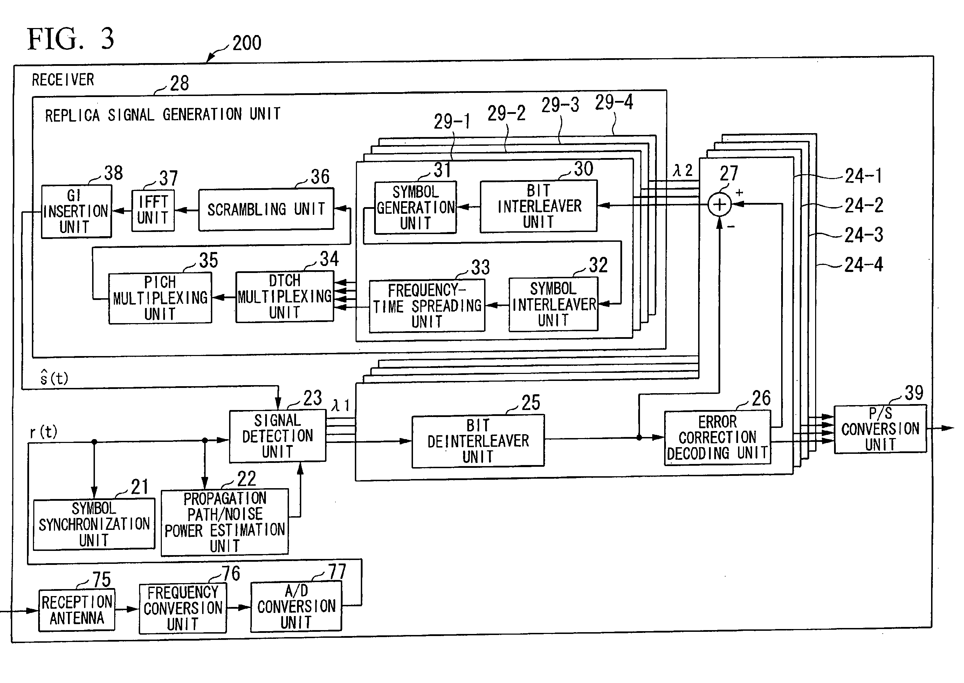

FIG. 3 is a schematic block diagram showing a part of the configuration of a receiver 200 according to the first embodiment of the present invention. The receiver 200 includes a reception antenna 75, a frequency conversion unit 76, an A/D (Analog/Digital) conversion unit 77, a symbol synchronization unit 21, a propagation path/noise power estimation unit 22 (also referred to as a propagation path estimation unit), a signal detection unit 23, per-code decoding units 24-1 to 24-4, a replica signal generation unit 28 (also referred to as a replica signal creation unit), and a P/S (Parallel/Serial) conversion unit 39.

The replica signal generation unit 28 includes per-code symbol generation units 29-1 to 29-4, a DTCH multiplexing unit 34, a PICH multiplexing unit 35, a scrambling unit 36, an IFFT unit 37, and a GI insertion unit 38.

The replica signal generation unit 28 creates a replica signal as a replica of a transmitted signal based on a received signal r(t). Specifically, for example, an error correction decoding unit 26 calculates a log-likelihood ratio or the like by a MAP (Maximum a posteriori Probability) decoding process. The replica signal generation unit 28 creates a replica signal s^(t) as the replica of the transmitted signal based on the calculated log-likelihood ratio.

The per-code symbol generation units 29-1 to 29-4 include a bit interleaver unit 30, a symbol generation unit 31, a symbol interleaver unit 32, and a frequency-time spreading unit 33. The per-code decoding units 24-1 to 24-4 further include a bit deinterleaver unit 25, an error correction decoding unit 26, and an addition unit 27.

After the received signal received by the reception antenna 75 undergoes a frequency conversion process into a baseband signal by the frequency conversion unit 76 and an analog-to-digital conversion process by the A/D conversion unit 76, a digital received signal r(t) undergoes a symbol synchronization process by the symbol synchronization unit 21. The symbol synchronization unit 21 executes the symbol synchronization process using correlation characteristics of a guard interval (GI) and a valid signal interval. A subsequent signal process is executed based on the result thereof.

The propagation path/noise power estimation unit 22 estimates a channel impulse response estimation value or a noise power estimation value using a pilot channel (PICH). As a propagation path estimation method, there are various methods such as a method of executing an estimation process by executing an RLS (Recursive Least Square) algorithm in which a replica signal of the pilot channel (PICH) is created and a square error of an absolute value thereof becomes a minimum, and a method of executing an acquisition process by mutually correlating a received signal r(t) and a replica signal of the pilot channel (PICH) on the time axis or the frequency axis. However, the propagation path estimation method is not limited thereto.

Even in terms of the noise power estimation method, it is possible to use a method of creating a replica of the pilot channel (PICH) using a channel impulse response estimation value estimated from the received pilot channel (PICH) and producing an estimation value from their difference. However, the noise power estimation method is not limited thereto.

For example, the channel impulse response estimation value and the noise power estimation value output from the propagation path/noise power estimation unit 22 are input to the signal detection unit 23, and are used to calculate a log-likelihood ratio of each bit when a MAP detection process is executed.

First, the signal detection unit 23 outputs a log-likelihood ratio of each bit using the received signal, the channel impulse response estimation value, and the noise power estimation value. The log-likelihood ratio is a value indicating whether the received bit of 0 has the greatest likelihood or whether the received bit of 1 has the greatest likelihood, and is calculated based on the bit error rate of a communication path.

In FIG. 3, log-likelihood ratios are output from the signal detection unit 23 to the code decoding units 24-1 to 24-4, but the log-likelihood ratios are those of bits allocated to different spreading codes.

Upon iteration to be described later, a log-likelihood ratio of each bit is output to the code decoding units 24-1 to 24-4 using a replica signal obtained from the received signal and the demodulation result, a channel impulse response estimation value, and a noise power estimation value.

In the per-code decoding units 24-1 to 24-4, the bit deinterleaver unit 25 executes a deinterleaving process of each bit for an input signal. The deinterleaving process is an inverse process to the interleaving process, and the order rearrangement by the interleaving process returns to the original.

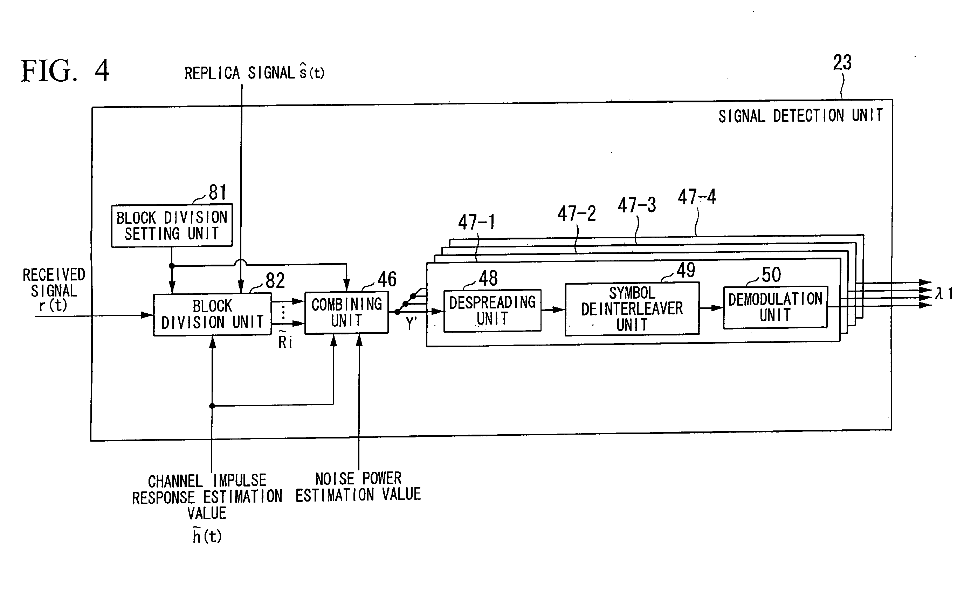

The error correction decoding unit 26 acquires signals combined by a combining unit 46 of the signal detection unit 26 via the per-code demodulation units 47-1 to 47-4 (FIG. 4) and the bit deinterleaver 25 (FIG. 3), and executes an error correction decoding process such as MAP decoding or the like. The error correction decoding unit 26 executes the error correction decoding process based on the demodulation result of a demodulation unit 50 (FIG. 4 to be described later) of the signal detection unit 23 and calculates the log-likelihood ratio of each bit.

The MAP decoding is a method of outputting the soft decision result such as a log-likelihood ratio or the like by including an information bit and a parity bit without performing the hard decision at the time of general error correction decoding such as turbo decoding, LDPC decoding, or Viterbi decoding. That is, the hard decision is made to determine the received signal only as 0 or 1, while the soft decision is made based on information (soft decision information) indicating how much it is accurate. The hard decision decoding may be executed without applying only to the soft decision decoding like MAP decoding.

A difference $\lambda 2$ between the input directed to the error correction decoding unit 26 and the output from the error correction decoding unit 26 is calculated by the addition unit 27 and is output to the replica signal generation unit 28. An input directed to the replica signal generation unit 28 is input to the bit interleaver unit 30. The bit interleaver unit 30 rearranges and outputs the difference $\lambda 2$ for every bit. In consideration of the magnitude of the difference $\lambda 2$, the symbol generation unit 31 executes a symbol modulation process for the output of the bit interleaver unit 30 by a modulation scheme (BPSK, QPSK, 16QAM, 64QAM, or the like) in the same category as that of the demodulation scheme of the receiver 200.

The symbol interleaver unit 32 makes the order arrangement for every symbol in an output of the symbol generation unit 31. The frequency-time spreading unit 33 spreads an output of the symbol interleaver unit 32 by a predetermined spreading code (channelization code).

The receiver 200 includes per-code decoding units and per-code symbol generation units whose number is the number of code multiplexes $C_{mux}$ ($C_{mux}$ is a natural number equal to or greater than 1). Here, $C_{mux}$=4. Spread signals by different spreading codes as outputs of the per-code symbol generation units 29-1 to 29-4 are output to the DTCH multiplexing unit 34 and are multiplexed (added) by the DTCH multiplexing unit 34.

In the PICH multiplexing unit 35, a pilot channel (PICH) to be used for propagation path estimation or the like is inserted into a predetermined position. Thereafter, the scrambling unit 36 executes a scrambling process by a base station-specific scrambling code, the IFFT unit 37 executes a frequency-time conversion process, the GI insertion unit 38 inserts the guard interval (GI), and the output of the GI insertion unit 38 is input to the signal detection unit 23 and used for a signal process upon iteration.

After the iterative decoding operation is performed a predetermined number of times, the output of the error correction decoding unit 26 is input to the P/S conversion unit 39 and undergoes a serial-to-parallel conversion process and then the demodulation result is output to the MAC unit (not shown).

FIG. 4 is a schematic block diagram showing an example of the configuration of the signal detection unit 23 (FIG. 3) according to the first embodiment of the present invention. The signal detection unit 23 includes a block division setting unit 81 (referred to as a time period setting unit), a block division unit 82 (referred to as a received signal extraction unit), a combining unit 46, and per-code demodulation units 47-1 to 47-4 (referred to as demodulation processing units).

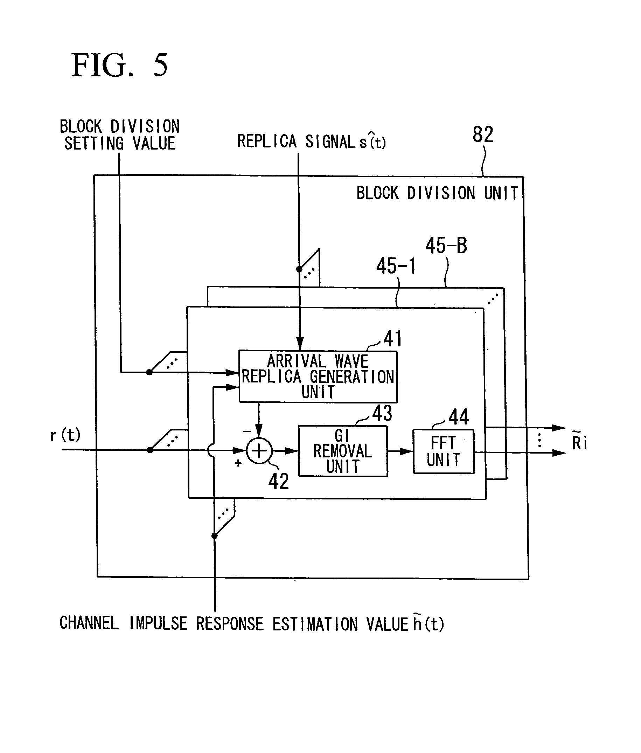

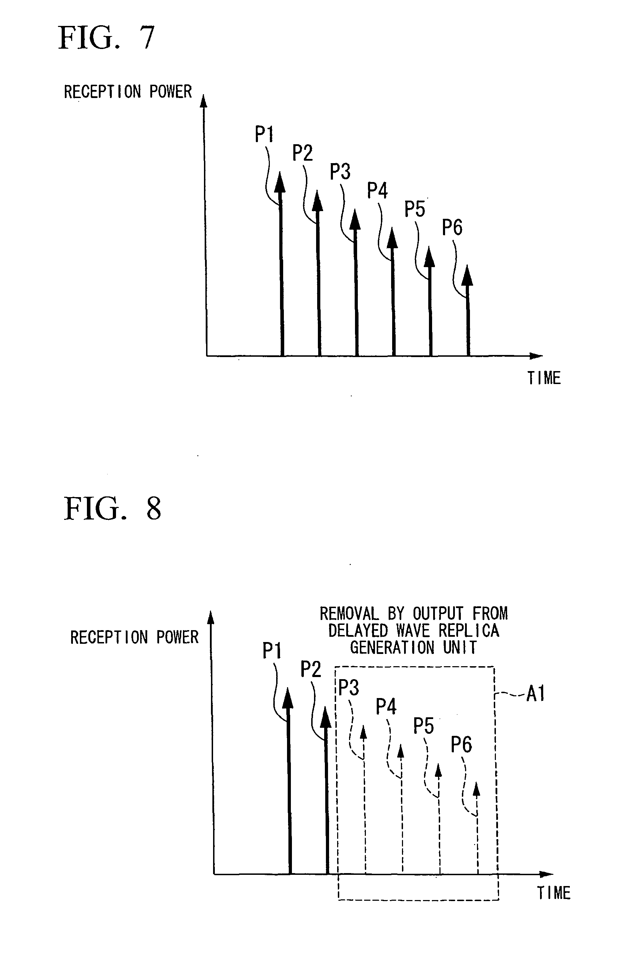

FIG. 5 is a diagram showing an example of the configuration of the block division unit 82 (FIG. 4) according to the first embodiment of the present invention. The block division unit 82 has arrival wave removal units 45-1 to 45-B. Here, B denotes the number of block divisions into which a block is divided and B is a natural number equal to or greater than 1. The block division unit 82 extracts a signal included in at least one time period divided by the block division setting unit 81 from a replica signal created by the replica signal generation unit 28 (FIG. 3) (see FIGS. 8 to 10 to be described later).

The block division setting unit 81 (FIG. 4) divides the replica signal created by the replica signal generation unit 28 into at least one time period. The block division setting unit 81 changes the number of divisions of the replica signal created by the replica signal generation unit 28 for every iterative process, and outputs a block division setting value (also referred to as the number of divisions) to the block division unit 82. The block division setting value is information regarding the configuration of a predetermined time period (block) to be divided for an iterative process, and includes information regarding the number of block divisions or the size of each block. A method of setting the number of block divisions for every iterative process may use a method in which the number of block divisions is preset in the receiver or a method in which the number of block divisions is set in the receiver based on propagation path characteristics between the transmitter and the receiver such as a channel impulse response estimation value, but it is not limited thereto.

In the block division unit 82, the arrival wave removal units 45-1 to 45-B are set based on a block division setting value output by the block division setting unit 81 (FIG. 4).

The arrival wave removal units 45-1 to 45-B respectively include an arrival wave replica generation unit 41, a subtraction unit 42, a GI removal unit 43, and an FFT unit 44. The arrival wave removal units 45-1 to 45-B remove an arrival wave of each predetermined time period from a received signal r(t) using a replica signal s^(t) generated by the replica signal generation unit 28 (FIG. 3).

The arrival wave replica generation unit 41 generates a replica $h_i$ of an arrival wave for every predetermined time period based on a channel impulse response estimation value as a propagation path estimation value estimated from the received signal r(t), the replica signal S^(t) generated by the replica signal generation unit 28 (FIG. 3), and the block division setting value output by the block division setting unit 81.

The subtraction unit 42 subtracts the arrival wave replica of every predetermined time period generated by the arrival wave replica generation unit 41 from the received signal r(t).

The per-code demodulation units 47-1 to 47-4 (FIG. 4) respectively include a despreading unit 48, a symbol deinterleaver unit 49, and a demodulation unit 50.

The subtraction unit 42 (FIG. 5) calculates the difference between the received signal r(t) input to the signal detection unit 23 and the output of the arrival wave replica generation unit 41 (FIG. 5) produced based on the replica signal s^(t) and the channel impulse response estimation value h~(t) input to the signal detection unit 23, and inputs the calculated difference to the GI removal unit 43.

The GI removal unit 43 removes the guard interval (GI) and the output of the GI removal unit 3 is input to the FFT unit 44. The FFT unit 44 executes a time-frequency conversion process for the input signal and obtains a signal $R\tilde{}_i$. Here, i is a natural number and $1 \leq i \leq B$.

The combining unit 46 (FIG. 4) combines signals $R\tilde{}i$ of time periods extracted by the block division unit 82. Specifically, the combining unit 46 executes a propagation path compensation process and a combining process for signals $R\tilde{}1$ to $R\tilde{}_8$ output by the arrival wave removal units 45-1 to 45-B using outputs $R\tilde{}_i$ of the arrival wave removal units 45-1 to 45-B (FIG. 5), the channel impulse response estimation value h~(t), and the noise power estimation value, and calculates and outputs a signal Y' to the per-code demodulation units 47-1 to 47-4 (FIG. 4).

For example, the combining unit 46 can use MMSE (Minimum Mean Square Error) combining or the like by an MMSE filter process. The combining unit 46 may use a block division error produced based on a replica signal or the like.

Using the signal Y', $C_{mux}$ (here, for example, $C_{mux}=4$) per-code demodulation units 47-1 to 47-4 (FIG. 4) execute a demodulation process of each spreading code. The despreading unit 48 executes a despreading process using each spreading code.

The symbol deinterleaver unit 49 interchanges an output of the despreading unit 48 for every symbol. The demodulation unit 50 executes a demodulation process for the signal output by the symbol deinterleaver unit 49.

The demodulation unit 50 makes a soft decision or a hard decision for the output of the symbol deinterleaver unit 49. Hereinafter, for example, the case where the demodulation unit 50 outputs a log-likelihood ratio of each bit as the soft decision result will be described. Using the following Equations (1) to (3), the demodulation unit 50 calculates a log-likelihood ratio $\lambda 1$. That is, when an n-th symbol output of the symbol deinterleaver unit 49 is set to Zn, the soft decision result $\lambda 1$ upon QPSK modulation can be expressed by the following Equations (1) and (2).

$$\lambda 1(b0) = \frac{2\,\mathrm{Re}[Zn]}{\sqrt{2}[1-\mu(n)]} \quad \cdot\cdot\cdot\ (1)$$

$$\lambda 1(b1) = \frac{2\,\mathrm{Im}[Zn]}{\sqrt{2}[1-\mu(n)]} \quad \cdot\cdot\cdot\ (2)$$

Here, Re[ ] in Equation (1) indicates a real part within the brackets, Im[ ] in Equation (2) indicates an imaginary part within the brackets, and $\mu(n)$ indicates a reference symbol (the amplitude of a pilot symbol) in n symbols. The modulation signal can be expressed by the following Equation (3).

$$Zn = \frac{1}{\sqrt{2}}(b0 + jb1) \quad \cdots \quad (3)$$

Here, an example of QPSK modulation has been shown, but the soft decision result (log-likelihood ratio) λ1 of each bit can be equally produced even for other modulation schemes.

In FIGS. 3 and 4, both a set of the bit interleaver unit 30 (FIG. 3) and the bit deinterleaver unit 25 (FIG. 3) and a set of the symbol interleaver unit 32 (FIG. 3) and symbol deinterleaver unit 49 (FIG. 4) are arranged, but any one set may be arranged. That is, only the bit interleaver unit 30 and the bit deinterleaver unit 25 may be arranged, or only the symbol interleaver unit 32 and the symbol deinterleaver unit 49 may be arranged.

Alternatively, all of the bit interleaver unit 30, the bit deinterleaver unit 25, the symbol interleaver unit 32, and the symbol deinterleaver unit 49 may not be arranged.

A chip interleaving process may be executed for every sub-carrier in the frequency direction.

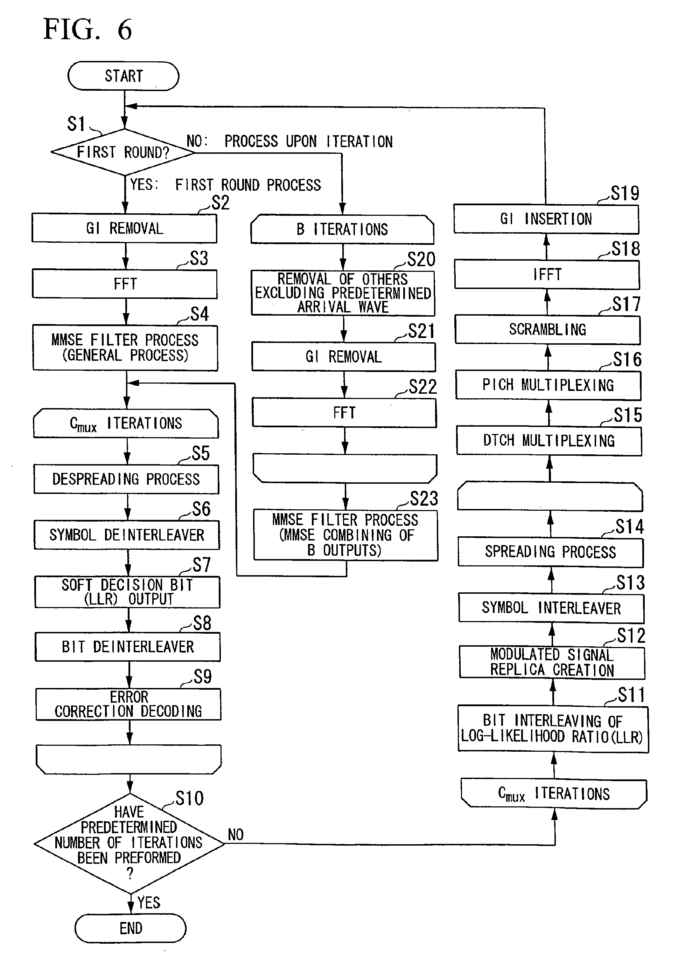

FIG. 6 is a flowchart showing an example of the operation of the receiver 200 (FIG. 3) according to the first embodiment of the present invention. The signal detection unit 23 determines whether or not it is a first round operation (step S1). Since a series of steps shown in the flowchart of FIG. 6 is all performed only within the receiver 200, any information from an outside source is unnecessary. The receiver can easily recognize the sequence number of an iterative operation. For example, this can be implemented by counting a series of processes for a corresponding packet in the receiver 200.

When determining that it is the first round operation in step S1, the GI removal unit 43 removes a guard interval (GI) from a received signal r(t) (step S2).

The FFT unit 44 executes an FFT process (time-frequency conversion process) (step S3).

Next, the combining unit 46 executes a general MMSE filter process (step S4). The despreading unit 48 executes a despreading process (step S5).

Next, the symbol deinterleaver unit 49 executes a symbol deinterleaver process (step S6). The demodulation unit 50 executes a soft decision bit output process (step S7). Next, the bit deinterleaver unit 25 executes a bit deinterleaver process (step S8).

The error correction decoding unit 26 executes an error correction decoding process (step S9). Next, it is determined whether the process of steps S1 to S9 has been iterated a predetermined number of times (step S 10).

As described with reference to FIG. 3, the process of S5 to S9 may be executed in $C_{mux}$ circuits arranged in parallel. A first MMSE filter process will be described later.

When it is determined that the process of steps S1 to S9 has not iterated the predetermined number of times in step S10, the bit interleaver unit 30 executes a bit interleaving process for the log-likelihood ratio λ1 using demodulation results λ2 for $C_{mux}$ codes (step S11).

The symbol generation unit 31 generates a modulated signal replica (step S 12). Next, the symbol interleaver unit 32 executes a symbol interleaver process (step S13). The frequency-time spreading unit 33 executes a spreading process using a predetermined spreading code (step S14).

After iterating the above-described process of steps S11 to S 14 $C_{mux}$ times, the DTCH multiplexing unit 34 executes a data traffic channel (DTCH) multiplexing process (step S 15). The PICH multiplexing unit 35 executes a pilot channel (PICH) multiplexing process (step S16).

Next, the scrambling unit 36 executes a scrambling process (step S 17).

The IFFT unit 37 executes an IFFT process (step S 18). Next, the GI insertion unit 38 inserts a guard interval (GI) (step S19). The signal into which the guard interval (GI) has been inserted in step S 19 is set as the replica signal and is used upon iterative demodulation.

When executing an iterative process, that is, when determining that it is not the first round operation, in step S1, the arrival wave removal units 45-1 to 45-B remove others excluding a predetermined arrival wave for every block based on a block division setting value output by the block division setting unit 81 (step S20). The GI removal unit 43 removes the guard interval (GI) (step S21). Next, the FFT unit 44 executes an FFT (Fast Fourier Transform) process (step S22).

The above-described process of steps S20 to S23 may be iterated by the number of B (B is a natural number) blocks, and may be executed in B circuits arranged in parallel. The combining unit 46 combines output signals from the B blocks according to a minimum mean square error rule by an MMSE filter. That is, the MMSE filter process is executed (step 23). After step 23, the same process as the first round process is executed.

The process of steps S 1 to S9 and S11 to S23 is iterated until it is determined that the above-described process has been iterated the predetermined number of times in step S 10.

Next, a process of the arrival wave removal units 45-1 to 45-B (FIG. 5) will be specifically described. Here, the operation of the arrival wave replica generation unit 41 and the subtraction unit 42 of an i-th arrival wave removal unit 45-i will be described.

First, in the arrival wave removal unit 45-i, the arrival wave replica generation unit 41 generates a replica $h_i$ of an arrival wave and subtracts the result of a convolution operation of the replica $h_i$ and the replica signal $s^\wedge(t)$ from the received signal $r(t)$. The subtraction result becomes the output of the subtraction unit 42.

FIG. 7 is a diagram showing a channel impulse response estimation value according to the first embodiment of the present invention. Here, the case where a 6-path channel impulse response estimation value is obtained from the propagation path/noise estimation unit 22 (FIG. 3) will be described. In FIG. 7, the horizontal axis represents time and the vertical axis represents reception power. The arrival wave removal units 45-1 to 45-B (FIG. 5) separate a 6-path arrival wave into 3 arrival waves each having two paths.

FIG. 8 is a diagram showing a channel impulse response estimation value in the arrival wave removal unit 45-1 according to the first embodiment of the present invention. In FIG. 8, the horizontal axis represents time and the vertical axis represents reception power. As shown in FIG. 8, first, in the arrival wave removal unit 45-1, a third path (P3), a fourth path (P4), a fifth path (P5), and a sixth path (P6) included in an area A1 surrounded by the dotted line are defined as $h_1(t)$, which is created by the above-described arrival wave replica generation unit 41.

The output of the above-described arrival wave replica generation unit 41 is produced by a convolution operation of $h_1(t)$ and $s^\wedge(t)$, and the output of the subtraction unit 42 is produced by subtracting the result of the convolution operation of $h_1(t)$ and $s^\wedge(t)$ from the received signal $r(t)$. That is, when the replica has been correctly generated, the output of the subtraction unit 42 can consider the output of the subtraction unit 42 as a signal received through a propagation path indicated by $((h(t)-h_1(t))$. Thus, signals P1 and P2 received through propagation paths indicated by the solid lines of FIG. 8 become the output of the subtraction unit 42.

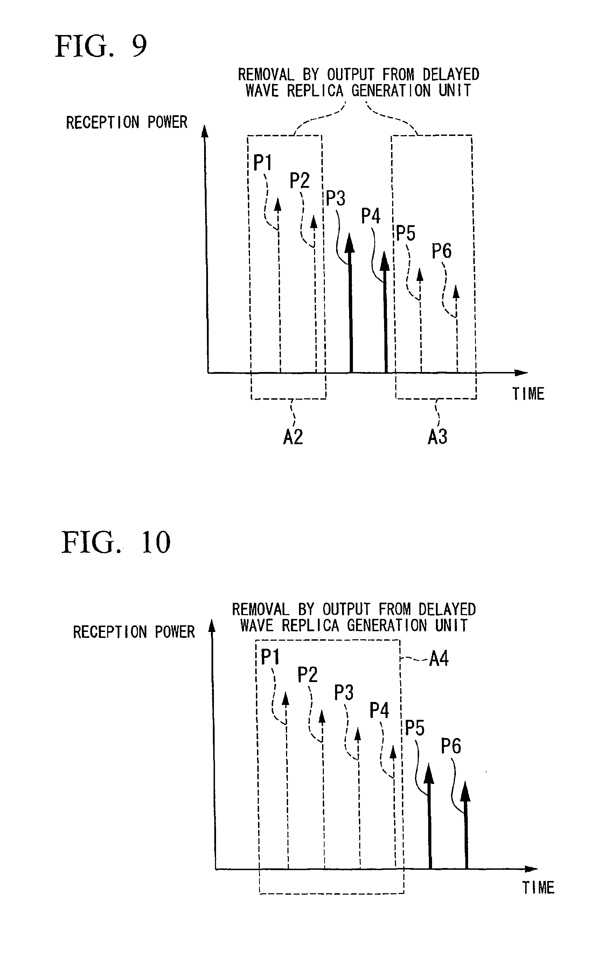

FIG. 9 is a diagram showing a channel impulse response estimation value in the arrival wave removal unit 45-2 according to the first embodiment of the present invention. In FIG. 9, the horizontal axis represents time and the vertical axis represents reception power. As shown in FIG. 9, first, in the arrival wave removal unit 45-2, a first path (P1) and a second path (P2) included in an area A2 surrounded by the dotted line and a fifth path (P5) and a sixth path (P6) included in an area A3 surrounded by the dotted line are defined as $h_2(t)$, which is created by the above-described arrival wave replica generation unit 41.

The output of the above-described arrival wave replica generation unit 41 is produced by a convolution operation of $h_2(t)$ and $s^\wedge(t)$, and the output of the subtraction unit 42 is produced by subtracting the result of the convolution operation of $h_2(t)$ and $s^\wedge(t)$ from the received signal $r(t)$. That is, when the replica has been correctly generated, the output of the subtraction unit 42 can consider the output of the subtraction unit 42 as a signal received through a propagation path indicated by $((h(t)-h_2(t))$. Thus, signals P3 and P4 received through propagation paths indicated by the solid lines of FIG. 9 become the output of the subtraction unit 42.

FIG. 10 is a diagram showing a channel impulse response estimation value in the arrival wave removal unit 45-3 according to the first embodiment of the present invention. In FIG. 10, the horizontal axis represents time and the vertical axis represents reception power. As shown in FIG. 10, first, in the arrival wave removal unit 45-3, a first path (P1), a second path (P2), a third path (P3), and a fourth path (P4) included in an area A4 surrounded by the dotted line are defined as $h_3(t)$, which is created by the above-described arrival wave replica generation unit 41.

The output of the above-described arrival wave replica generation unit 41 is produced by a convolution operation of $h_3(t)$ and $s^\wedge(t)$, and the output of the subtraction unit 42 is produced by subtracting the result of the convolution operation of $h_3(t)$ and $s^\wedge(t)$ from the received signal $r(t)$. That is, when the replica has been correctly generated, the output of the subtraction unit 42 can consider the output of the subtraction unit 42 as a signal received through a propagation path indicated by $((h(t)-h_3(t))$. Thus, signals P5 and P6 received through propagation paths indicated by the solid lines of FIG. 10 become the output of the subtraction unit 42.

In the description of FIGS. 8 to 10, the case where the arrival wave removal units 45-1 to 45-3 set a predetermined time period based on the identified number of arrival waves has been described. That is, the case where a replica signal to be created and subtracted is changed for each of the arrival wave removal units 45-1 to 45-3 based on the identified number of arrival waves based on a channel impulse response estimation value has been described. Besides this method, the following method is available.

For example, the arrival wave removal units 45-1 to 45-3 set a predetermined time period based on a time of the identified arrival wave. That is, an arrival wave removal unit to execute a process is determined by the arrival time period of the arrival wave by dividing the arrival wave arrival time into B items. That is, a replica signal to be created and subtracted may be changed for each arrival wave removal unit based on the time of an identified arrival wave.

The arrival wave removal units 45-1 to 45-3 may set a predetermined time period based on reception power of an identified arrival wave. That is, all received signals are divided into B items so that received signals included in an arrival wave are substantially uniform in order of arrival times, and the arrival wave removal unit to execute a process is determined. That is, the replica signal to be created and subtracted may be changed for each arrival wave removal unit based on reception power of an identified arrival wave.

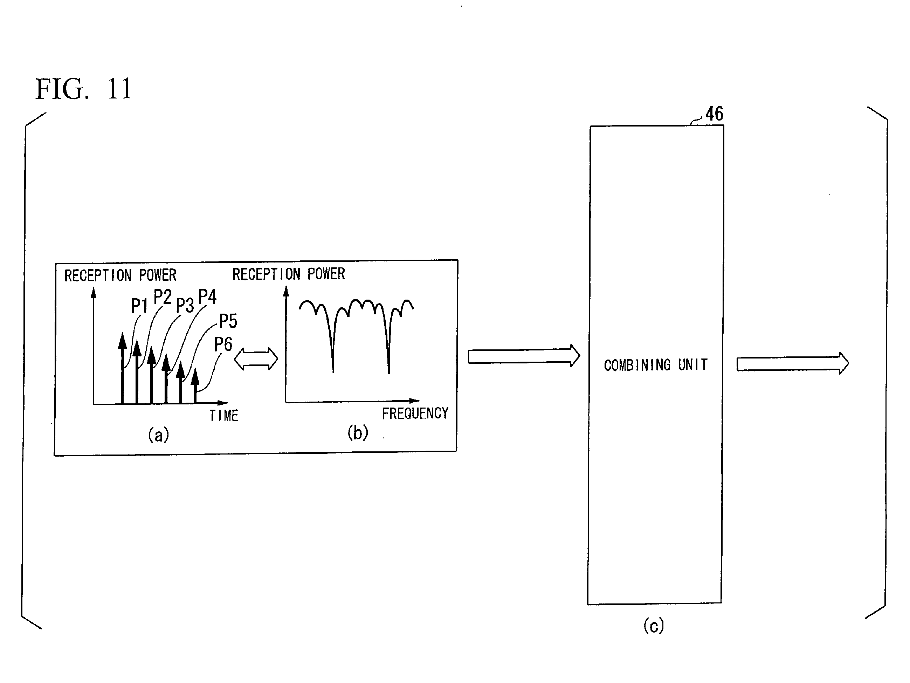

FIGS. 11(a) to 11(c) are diagrams showing a channel impulse response estimation value and the combining unit 46 in the first round process according to the first embodiment of the present invention. Here, the operation of the combining unit 46 shown in FIG. 4 and steps S4 and S23 shown in FIG. 6 will be described. Hereinafter, the case where the combining unit 46 executes an MMSE filter process will be described.

First, the operation of the combining unit 46 of the first round is shown. When the received signal is expressed in a frequency domain, a received signal R can be expressed as the following Equation (4).

$$R = \hat{H}S + N \quad \cdots \quad (4)$$

Here, H^ denotes the transfer function of an estimated propagation path, which can be expressed by an Nc*Nc diagonal matrix when assuming that only an arrival wave exists within a guard interval (GI).

Nc denotes the number of spread-OFCDM sub-carriers. H^ can be expressed as the following Equation (5).

$$\hat{H} = \begin{pmatrix} \hat{H}_1 & & & 0 \\ & \hat{H}_2 & & \\ & & \ddots & \\ 0 & & & \hat{H}_{Nc} \end{pmatrix} \quad \cdots \quad (5)$$

In Equation (4), S denotes a transmitted symbol, which can be expressed by an Nc*1 vector as shown in the following Equation (6).

$$S^T = \left( S_1, S_2, \cdots, S_{Nc} \right) \quad \cdots \quad (6)$$

Likewise, in Equation (4), a received signal R and a noise component N can be expressed by an Nc*1 vector as shown in the following Equations (7) and (8).

$$R^T = \left( R_1, R_2, \cdots, R_{Nc} \right) \quad \cdots \quad (7)$$

$$N^T = \left( N_1, N_2, \cdots, N_{Nc} \right) \quad \cdots \quad (8)$$

In Equations (6) to (8), the superscript T denotes the transposed matrix. When the received signal is received, an output Y of the combining unit 46 can be expressed by an Nc*1 vector as shown in Equation (9).

$$Y = WR \quad \cdots \quad (9)$$

The combining unit 46 determines an MMSE filter coefficient W based on a channel impulse response estimation value and a noise power estimation value. Here, the MMSE filter coefficient W can be expressed by an Nc*Nc diagonal matrix as shown in the following Equation (10).

$$W = \begin{pmatrix} W_1 & & & 0 \\ & W_2 & & \\ & & \ddots & \\ 0 & & & W_{Nc} \end{pmatrix} \quad \cdots \quad (10)$$

Each element of the MMSE filter coefficient $W_m$ can be expressed by the following Equation (11) at the time of spreading in a frequency direction. Here, m is 1 to Nc (which is a natural number equal to or greater than 2).

$$W_m = \frac{\hat{H}_m^H}{\hat{H}_m^H \hat{H}_m + (C_{mux}-1)\hat{H}_m^H \hat{H}_m + \hat{\sigma}_N^2} = \frac{\hat{H}_m^H}{C_{mux}' \hat{H}_m^H \hat{H}_m + \hat{\sigma}_N^2} \cdots (11)$$

In Equation (11),

$$(C_{mux}-1)\hat{H}_m^H \hat{H}_m$$

is an interference component from other codes at the time of code multiplexing. In Equation (11),

$$\hat{\sigma}_N^2$$

denotes the noise power estimation value. In Equation (11), the superscript H denotes the Hamiltonian (conjugate transpose).

Each element of the above-described MMSE filter coefficient $W_m$ can be expressed by the following Equation (12) when assuming that the orthogonality between codes is maintained at the time of spreading in a time direction.

$$W_m = \frac{\hat{H}_m^H}{\hat{H}_m^H \hat{H}_m + \hat{\sigma}_N^2} \quad \cdots \quad (12)$$

FIGS. 11(a) to 11(c) show the forms in which signals going through the propagation paths shown in FIG. 7 are input to the combining unit 46 based on the above-described coefficient in the first round process.

FIG 11(a) shows channel impulse responses P1 to P6 shown in FIG. 7. The horizontal axis represents time and the vertical axis represents reception power.

FIG. 11(b) shows a transfer function in which the channel impulse responses P1 to P6 are expressed on the frequency axis. The horizontal axis represents frequency and the vertical axis represents reception power. In FIG. 11(b), it can be seen that frequency selectivity is high (change of power in the frequency direction is intensive) in the first round process. This state means that orthogonality between codes in MC-CDM as described above is collapsed and inter-code interference is caused.

Next, the operation of the combining unit 46 upon iteration will be described. First, a replica signal $\hat{r}_i$ to be used in the i-th arrival wave removal unit 45-i upon iterative demodulation can be expressed as the following Equation (13).

$$\hat{r}_i = \left(\hat{h} - \hat{h}_i\right) \otimes \hat{s} \quad \cdots (1\,3)$$

Here, $\hat{h}_i$ is a delay profile obtained by extracting only an arrival wave to be processed in the i-th arrival wave removal unit 45-i. $\hat{s}$ is a replica signal calculated based on a log-likelihood ratio $\lambda 2$ obtained by the previous-round error correction decoding process. In Equation (13),

$\otimes$

denotes a convolution operation. Accordingly, the output of the arrival wave removal unit 45-i, that is, the output $\tilde{R}_i$ of the i-th arrival wave removal unit 45 of FIG 4, can be expressed as the following Equation (14).

$$\tilde{R}_i = R - \hat{R}_i = \left[\hat{H}_1\ \hat{H}_2 \cdots \hat{H}_B\right]\left[\hat{S}^T\ \hat{S}^T \cdots \hat{S}^T\right]^T + \Delta = \hat{H}\ \hat{S} + \Delta = \left[\tilde{R}_1^T\ \tilde{R}_2^T \cdots \tilde{R}_B^T\right]^T \quad \cdots \quad (1\,4)$$

Here, $\Delta$ includes the error signal by the uncertainty of a replica and a thermal noise component. At this time, an output Y' of the combining unit 46 can be expressed by the following Equation (15).

$$Y' = W' \tilde{R} = \left[W_1'\ W_2' \cdots W_B'\right] \cdot \left[\tilde{R}_1^T\ \tilde{R}_2^T \cdots \tilde{R}_B^T\right]^T \quad \cdots \quad (1\,5)$$

Here, assuming that the replica signal is generated with high accuracy and $\Delta$ does not include a component by a replica error but includes only a thermal noise component, a partial matrix of the MMSE filter coefficients can be expressed by a diagonal matrix as shown in Equation (16).

$$W_i' = \begin{bmatrix} W_{i,1}' & & & 0 \\ & W_{i,2}' & & \\ & & \ddots & \\ 0 & & & W_{i,Nc}' \end{bmatrix} \quad \cdots \quad (1\,6)$$

In addition, the input signal directed to the combining unit 46 has low frequency selectivity and hence is in a state close to flat fading as described later. Therefore, each element can be expressed as the following Equation (17) when assuming that there is no inter-code interference at the time of code multiplexing.

$$W'_{i,m} = \frac{\hat{H}^H_{i,m}}{\sum_{i'=1}^{B} \hat{H}^H_{i',m} \hat{H}_{i',m} + \hat{\sigma}^2_N} \quad \cdot \cdot \cdot (1\,7)$$

$H^\wedge_{i',m}$ is the m-th transfer function in the i'-th arrival wave removal unit. $H^\wedge_{i',m}{}^H$ is the Hamiltonian of $H^\wedge_{i',m}$.

In Equation (17), the first term of the denominator may be multiplied by $C_{mux}$. That is, the following Equation (17') may be used for an input signal directed to the combining unit 46 at the time of an iterative process.

$$W_{i,m} = \frac{\hat{H}^H_{i,m}}{C_{mux} \sum_{i'=1}^{B} \hat{H}^H_{i',m} \hat{H}_{i',m} + \hat{\sigma}^2_N} \quad \cdot \cdot \cdot (1\,7')$$

In Equations (17) and (17'), a noise power estimation value $\sigma^\wedge_N{}^2$ may be produced based on the replica signal $s^\wedge(t)$ output by the replica signal generation unit 28 (FIG. 3), the channel impulse response estimation value $h^\sim(t)$ estimated by the propagation path/noise power estimation unit 22 (FIG. 3), and the received signal r(t).
For example, the noise power estimation value is set by subtracting the result of a convolution operation of the replica signal $s^\wedge(t)$ and the channel impulse response estimation value $h^\sim(t)$ from the received signal r(t).

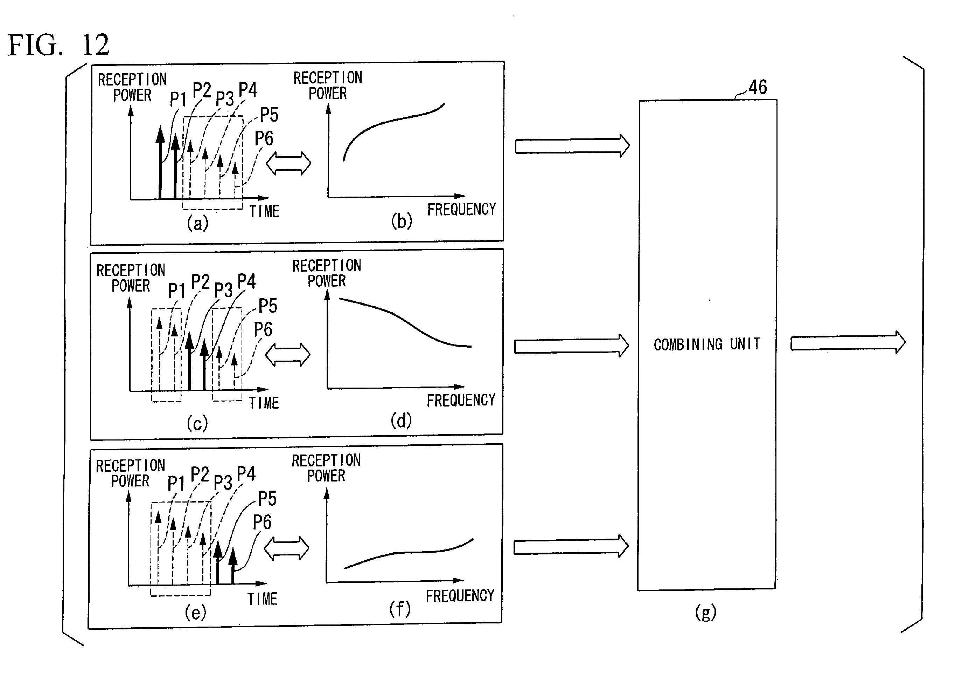

FIGS. 12(a) to 12(g) are a diagram showing a channel impulse response estimation value and the combining unit 46 in the first round process according to the first embodiment of the present invention. FIG. 12 shows the form in which signals through propagation paths shown in FIGS. 8 to 10 are input to the combining unit 46 based on MMSE filter coefficients in an iterative process. Here, the number of arrival wave removal units, B, is set to 3. In FIGS. 12(a), 12(c), and 12(e), the horizontal axis represents time and the vertical axis represents reception power. In FIGS. 12(b), 12(d), and 12(f), the horizontal axis represents frequency and the vertical axis represents reception power.
The combining unit 46 uses an MMSE filter coefficient $W_m$ expressed by Equation (11) or (12) at the time of first round demodulation, and uses an MMSE filter coefficient $W'_{i,m}$ expressed by Equation (17) at the time of iterative demodulation.
Like FIG. 11(a), FIGS. 12(a), 12(c), and 12(e) show channel impulse responses P1 to P6 shown in FIGS. 8 to 10. FIGS. 12(b), 12(d), and 12(f) show transfer functions expressing the channel impulse responses P1 to P6 on the frequency axis.
It can be seen that frequency selectivity is low (power change is small in the frequency direction) at the time of the iterative process of FIGS. 12(b), 12(d), and 12(f). This state means that orthogonality is maintained between codes in MC-CDM and inter-code interference is difficult to occur.
As described above, the iterative process is executed, thereby removing an arrival wave exceeding the guard interval (GI) and simultaneously removing inter-code interference as advantageous effects.

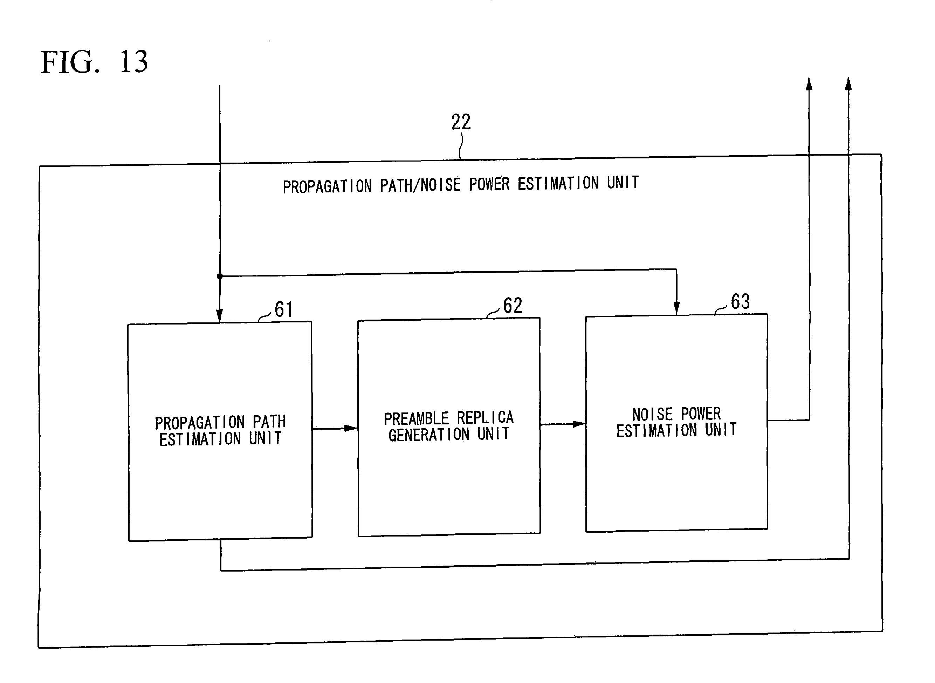

FIG. 13 is a diagram showing the configuration of the propagation path/noise power estimation unit 22 (FIG. 3) according to the first embodiment of the present invention. The propagation path/noise power estimation unit 22 includes a propagation path estimation unit 61, a preamble replica generation unit 62, and a noise power estimation unit 63.
The propagation path estimation unit 61 estimates a channel impulse response using a pilot channel (PICH) included in a received signal. The preamble replica generation unit 62 creates a replica signal of the pilot channel (PICH) using the channel impulse response estimation value produced by the propagation path estimation unit 61 and a PICH signal waveform as known information.
The noise power estimation unit 63 estimates noise power by calculating the difference between the pilot channel (PICH) part included in the received signal and the replica signal of the pilot channel (PICH) output from the preamble replica generation unit 62.
As a propagation path estimation method in the propagation path estimation unit 61, various methods are available such as a method of deriving a propagation path based on a minimum mean square error rule using an RLS algorithm and a method using a frequency correlation.

According to the receiver 200 according to the first embodiment of the present invention, the arrival wave replica generation unit 41 (FIG. 5) removes an arrival wave from the received signal r(t) for each predetermined time period using a replica signal created by the replica signal generation unit 28 (FIG 3), the combining unit 46 (FIG. 4) combines a signal from which the arrival wave has been removed for each predetermined time period, and the demodulation unit 50 (FIG. 4) executes a soft decision for the combined signal, so that it is possible to execute an FFT (Fast Fourier Transform) process for the combined signal from which the arrival wave has been removed. It is possible to execute a despreading process for a signal of which frequency selectivity is reduced by removing the arrival wave and it is possible to remove inter-code interference in a computational amount regardless of the number of codes.

The reason why characteristics can be improved by setting the number of block divisions to be different for each iterative process of block division will be described in the following.

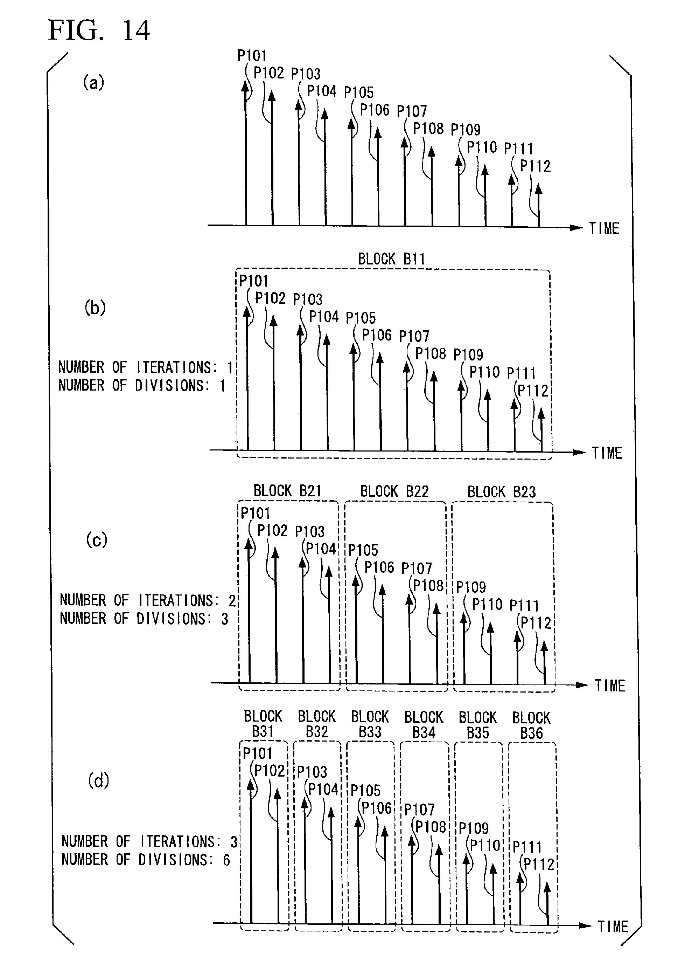

FIGS. 14(a) to 14(d) are diagrams illustrating a process of the block division setting unit 81 (FIG. 4) according to the first embodiment of the present invention. This process is an example of setting the number of block divisions to be different for each iterative process of a block division. Here, FIG. 14(a) shows the case where the receiver 200 has received signals of 12 multipaths P101 to P112. In FIGS. 14(a) to 14(d), the horizontal axis represents time and the vertical axis represents reception power.

FIG. 14(b) shows the case where the number of block divisions is 1 in a first iterative process. In FIG. 14(b), paths P101 to P 112 are set to a block B11.

FIG. 14(c) shows the case where the number of block divisions is 3 in a second iterative process. In FIG. 14(c), paths P101 to P104 are set to a block B21, paths P105 to P108 are set to a block B22, and paths P109 to P 112 are set to a block B23.

FIG. 14(d) shows the case where the number of block divisions is 6 in a third iterative process. In FIG. 14(d), paths P101 and P102 are set to a block B31, paths P103 and P104 are set to a block B32, paths P105 and P106 are set to a block B33, paths P107 and P108 are set to a block B34, paths P109 and P110 are set to a block B35, and paths P111 and P112 are set to a block B36.

In the first embodiment of the present invention, ISI and ICI can be reduced or suppressed as described above by executing a block division process for multipaths of signals received by the receiver 200, and simultaneously MCI (Multi Code Interference: inter-code interference) can be reduced by decreasing the delay distribution in each block. The MCI can be further reduced since the delay spread is decreased in each block as the number of block divisions is increased.

On the other hand, the improvement of characteristics may be limited as the number of block divisions is increased due to a division error occurring at the time of executing a block division process. To execute the block division process in this embodiment, first, a transmitted signal replica is generated and an arrival wave replica corresponding to each block is generated based on the generated transmitted signal replica and the channel impulse response estimation value. The block division process is executed by subtracting the generated arrival wave replica from the received signal. Thus, the division error is caused by the uncertainty of the used transmitted signal replica.

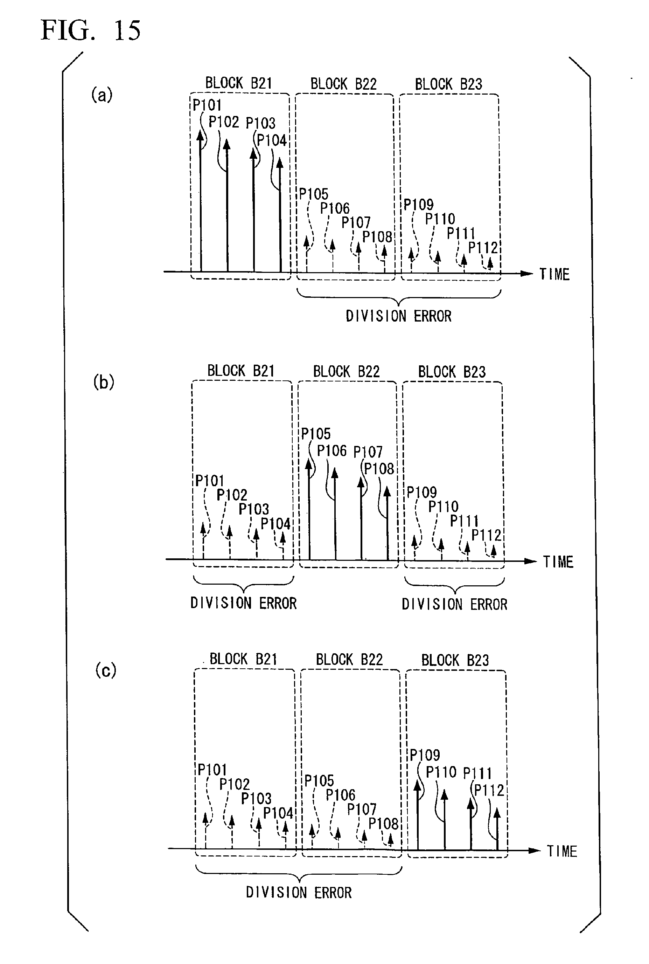

FIGS. 15(a) to 15(c) are diagrams illustrating effects according to the first embodiment of the present invention. In FIGS. 15(a) to 15(c), the horizontal axis represents time and the vertical axis represents reception power. FIGS. 15(a) to 15(c) show the forms in which a division error occurs when the number of block divisions is set to 3 for 12 multipaths P101 to P 112.

In FIGS. 15(a) to 15(c), the time periods of blocks B21 to B23 are respectively set so that multipaths P101 to P104 are included in the block B21, multipaths P105 to P108 are included in the block B22, and multipaths P109 to P112 are included in the block B23.

For example, as shown in FIG. 15(a), an arrival wave included in the block B21 is obtained by subtracting the arrival wave replica generated based on arrival waves included in the blocks B22 and B23 and the transmitted signal replica from the received signal. When the transmitted signal replica is ideal, the arrival waves included in the blocks B22 and B23 can be completely removed and hence only the arrival wave included in the block B21 can be obtained.

However, since uncertainty occurs in the transmitted signal replica when the number of iterations is small, a division error occurs due thereto. Likewise, a division error occurs even in each of the blocks B22 and B23 as shown in FIGS. 15(b) and 15(c).

The improvement of characteristics is affected as the division error increases.

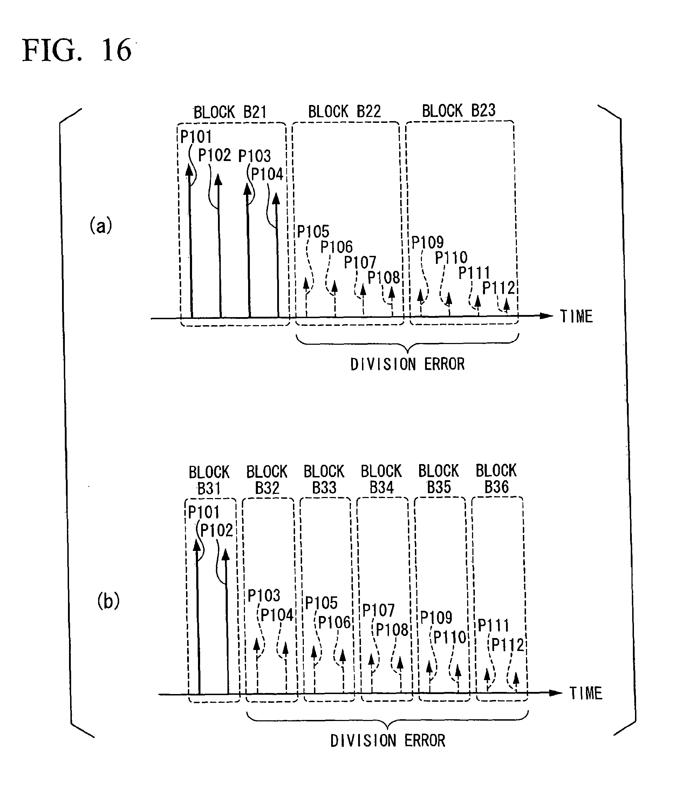

FIGS. 16(a) and 16(b) are diagrams illustrating effects according to the first embodiment of the present invention. In FIGS. 16(a) and 16(b), the horizontal axis represents time and the vertical axis represents reception power. FIG. 16(a) shows the form in which a division error occurs when the number of block divisions is set to 3 for 12 multipaths P101 to P112. FIG. 16(b) shows the form in which a division error occurs when the number of block divisions is set to 6 for 12 multipaths P101 to P112.

Division errors of the blocks B22 and B23 of FIG. 16(a) are the same as those of the blocks B33 to B36 of FIG. 16(b). Thus, when the case where the number of block divisions is set to 3 as shown in FIG. 16(a) is compared with the case where the number of block divisions is set to 6 as shown in FIG. 16(b), only the division error of the block B32 of FIG. 16(b) becomes large.

That is, it means that the influence by the division error is increased as the number of block divisions is increased when the uncertainty of a replica is the same.

For simplicity in FIGS. 15(a) to 15(c) and FIGS. 16(a) and 16(b), the division error for an arrival wave included in a desired block is omitted.

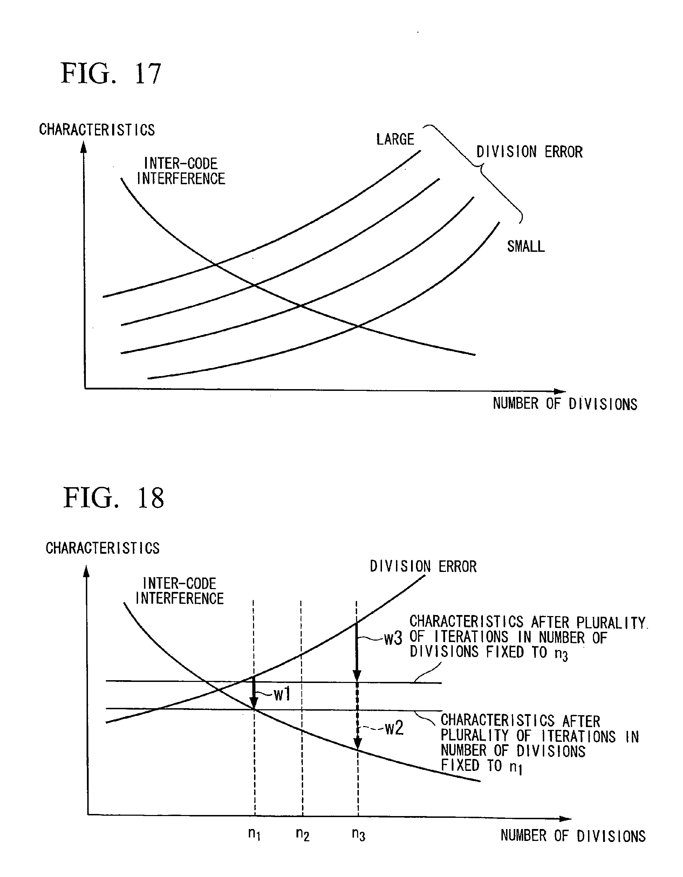

FIG. 17 is a graph showing the relationship of the number of divisions and characteristics according to the first embodiment of the present invention. In FIG. 17, the horizontal axis represents number of divisions and the vertical axis represents characteristics. The characteristics for division error varies with the magnitude of division error. This corresponds to the accuracy of a transmitted signal replica.

As shown in FIG. 17, the characteristics of inter-code interference is decreased as the number of divisions is increased. On the other hand, the characteristics for division error is increased as the number of divisions is increased. That is, the division error is increased as the number of divisions is increased regardless of whether the division error is small or large.

FIG. 18 is a graph showing characteristics when the number of block divisions has been fixed for all iterative processes. In FIG. 18, the horizontal axis represents number of divisions and the vertical axis represents characteristics. Here, the characteristics are the characteristics for inter-code interference and the characteristics for division error.

As shown in FIG. 18, when the number of block divisions is as small as $n_1$, the characteristics degradation by division error in a certain iterative process is small, and the characteristics improvement by MCI (inter-code interference) is small even in an iterative case. That is, as indicated by an arrow w1 of the number of divisions, $n_1$, the division error is improved from the intersection (the tail of the arrow wl) with the original division error curve to the intersection (the head of the arrow w1) with the inter-code interference curve after a plurality of iterations, but the characteristics improvement thereof is small.

On the other hand, since the characteristics degradation is small when the number of block divisions is large as $n_3$, the characteristics improvement expected by an iterative process is large but the burst error probability is high. Consequently, the error rate characteristics is degraded. That is, the case where the number of block divisions is fixed is compared with the case where the number of block divisions is set to be large and the case where the number of block divisions is set to be small, the characteristics may be degraded when the number of block divisions is large in an iterative case. That is, as indicated by the arrow w1 of the number of divisions, $n_3$, the division error improvement after a plurality of iterations in the number of blocks fixed to $n_3$ does not extend to the intersection with the inter-code interference curve as indicated by the arrow w2. The division error improvement is suppressed at a horizontal line indicating "the characteristics after a plurality of iterations in the number of blocks fixed to $n_3$" and is stopped at a position as indicated by an arrow w3. Consequently, the characteristics is worse as compared with when the number of divisions is $n_1$.

Thus, in this embodiment, the number of block divisions is set to be different with respect to the number of iterations as an object to improve characteristics by iterations in consideration of the above.

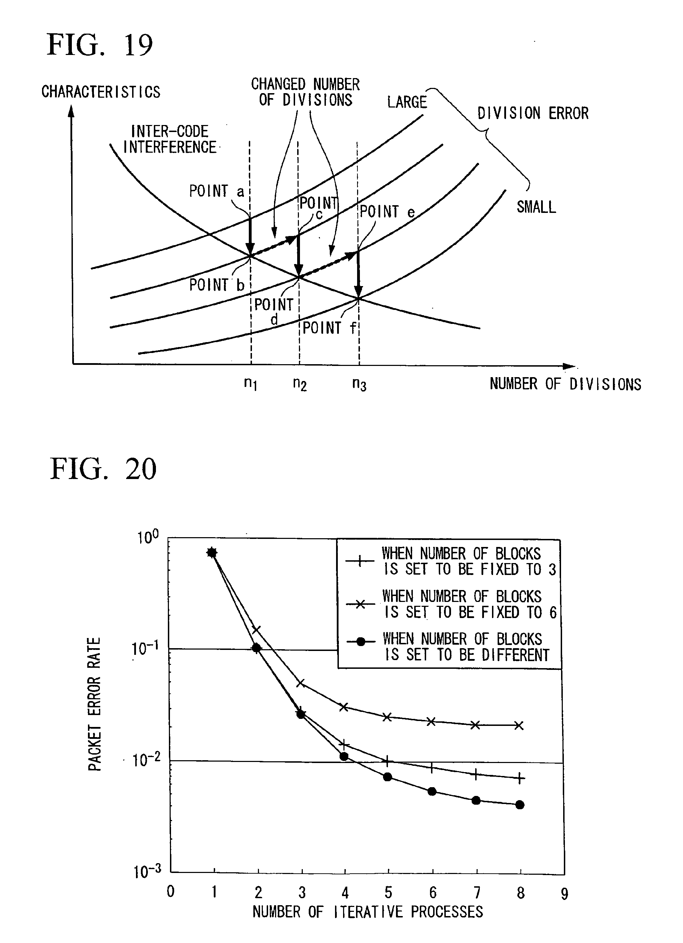

FIG. 19 is a graph showing an example of the improvement of characteristics when the number of block divisions has been set to be different. In FIG. 19, the horizontal axis represents number of divisions and the vertical axis represents characteristics. In FIG. 19, $n_1$ to $n_3$ are set in ascending order of the number of block divisions and the number of block divisions is set to be large as the number of iterations is large.

In the early stage of an iterative process, the characteristics degradation by the division error may be suppressed by setting the number of block divisions to $n_1$. However, the characteristics gradually moves from point a of the figure to point b by inter-code interference obtained when the number of block division is $n_1$.

Next, an iterative process is continued by setting the number of block divisions to $n_2$. The burst error probability is decreased since the uncertainty of a transmitted signal replica is decreased at the time of point c when the number of block divisions is set to $n_2$ as compared with when the number of block divisions is $n_1$.

Thus, the characteristics can be improved to point d by the improvement of inter-code interference obtained when the number of block divisions is $n_2$ by continuing the iterative process. Likewise, the characteristics can be improved by setting the number of block divisions to be large in the following. That is, a process is now continued by setting the number of block divisions to $n_3$. Then, the division error can be improved from the characteristics of point e to the characteristics of point f.

Setting of the number of block divisions at the time of each iterative process may not be the characteristics by inter-code interference obtained by the number of block divisions.

As described above, the characteristics can be improved by setting the number of block divisions with respect to the number of iterative processes.

FIG. 20 is a graph showing an example of evaluation results by computer simulation when a reception method is used according to the first embodiment of the present invention. In FIG. 20, the horizontal axis represents number of iterative processes and the vertical axis represents packet error rate.

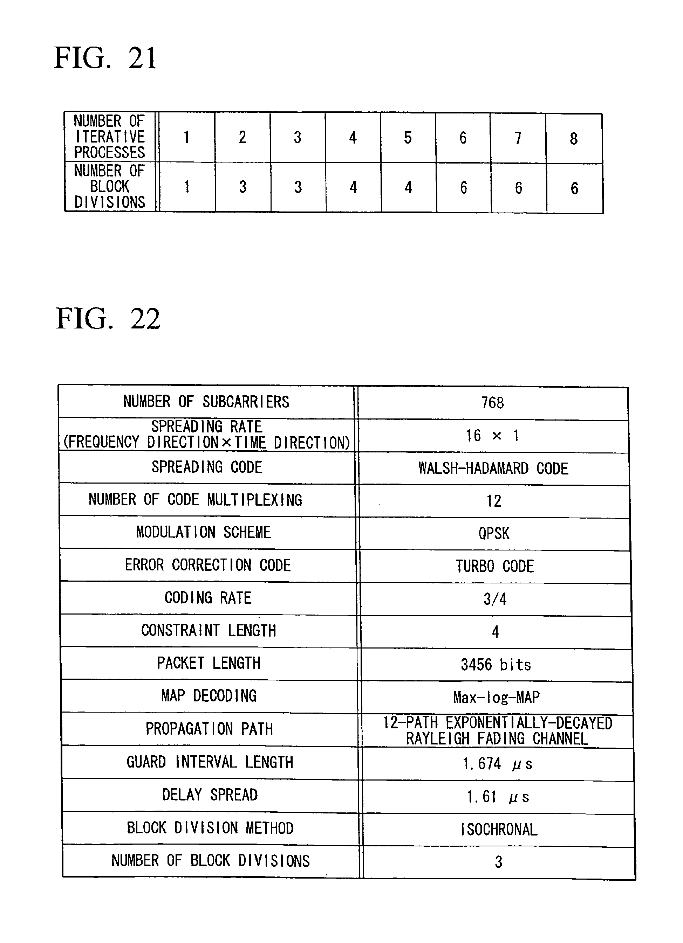

FIG. 20 shows packet error rate characteristics of the case where the same number of block divisions is set for all values of the number of iterative processes and the case where the number of block divisions is set to be different. The number of block divisions set by the computer simulation is preset for each number of iterative processes. That is, a mark "+" indicates the packet error rate for the number of iterative processes when the number of block divisions is set to be fixed to 3, and a mark "x" indicates the case where the number of block divisions is fixed to 6. A mark "•" indicates the case where the number of block divisions is set to be different as in the following (FIG. 21). In the case where the number of iterative processes is 8, the packet error rate was 0.01 when the number of block divisions is fixed to 6. When the number of block divisions is fixed to 3, the packet error rate is 0.006. When the number of block divisions is set to be different, the packet error rate is 0.003.

FIG. 21 is a table showing the relationship of the number of block divisions and the number of iterative processes set by the computer simulation of FIG. 20. That is, the number of block divisions was set to 1, 3, 3, 4, 4, 6, 6, and 6 when the number of iterative processes was 1, 2, 3, 4, 5, 6, 7, and 8 in the computer simulation of FIG. 20.

FIG. 22 is a table showing main simulation parameters using the computer simulation of FIG. 20. As shown in FIG. 22, the number of sub-carriers was set to 768. In addition, a spreading rate (Frequency DirectionxTime Direction) of 16x 1 was used.

A Walsh-Hadamard code was used as the spreading code.

The number of code multiplexes was set to 12. QPSK was used as the modulation scheme.

A turbo code was used as the error correction code. The coding rate was set to 3/4. The constraint length was set to 4. The packet length was set to 3456 bits. MAX-log-MAP was used as the MAP decoding.

In addition, a 12-path exponentially-decayed Rayleigh fading channel was used as the propagation path. The guard interval length was set to 1.674 μs. The delay spread was set to 1.61 μs.

The block division method was set to be isochronal. The number of block divisions was set to 3.

As seen from FIG. 20, the characteristics in the case where the number of block divisions is set to be different for each iterative process is improved in this embodiment as compared with the characteristics in the case where the same number of block divisions is set.

As described above, an example in which the characteristics is improved by setting the number of block divisions to be large as the number of iterative processes is increased based on the inter-code interference and division error has been described, but it is not limited thereto. Alternatively, the number of block divisions may be set based on at least one of inter-symbol interference, inter-subcarrier interference, and a gain (division gain) obtained by block division such as a path diversity gain or the like in place of inter-code interference. For example, the gain by block division can be obtained since interference is small as the number of block divisions is increased when each block exceeds a guard interval after block division in the case of inter-symbol

interference or inter-subcarrier interference. The path diversity gain can be obtained by combining the results of blocks in the combining unit since the arrival path is finely separated as the number of block divisions is increased.

The number of block divisions may be set to be different for all values of the number of iterative processes or may be set to be small. For example, it is applicable to the case in which a good characteristics is obtained when the number of block divisions is small if the uncertainty of a transmitted signal replica is the same.

In the first embodiment, the case where a canceller process, a replica generation process, a demodulation process, and a decoding process are executed using the soft decision result from a received signal has been described as an example of the receiver 200. Alternatively, the canceller process, the replica generation process, the demodulation process, and the decoding process may be executed using the hard decision result. That is, a MAP detection unit having a soft decision output unit which executes a soft decision and outputs a log-likelihood ratio may be used as a demodulation processing unit which demodulates a modulation signal of QPSK or 16QAM from a received signal (performs bit decomposition).

A replica signal generation unit which generates a replica signal of a transmitted signal from a hard decision value may be used. An arrival wave removal unit which removes an arrival wave based on a replica signal generating a soft decision value is used, but an arrival wave removal unit which removes an arrival wave based on a replica signal generated from the above-described hard decision value from the received signal may be used. The same is true for subsequent embodiments.

In the first embodiment, MMSE combining as one method of linear combining is used when outputs of arrival wave removal units are combined, but ZF (Zero Forcing), MRC (Maximum Ratio Combining) or the like may be used. Alternatively, non-linear combining may be used.

In the first embodiment, each code is used as a unit of error correction coding, but error correction coding may be executed through a plurality of codes.

In the first embodiment, the case where the receiver 200 is used for MC-CDM has been described, but it may be used for multi-carrier signals which are not applied to a spreading process such as OFDM (Orthogonal Frequency Division Multiplexing).

(Second Embodiment)

Next, the second embodiment of the present invention will be described. In this embodiment, a method of reducing MCI (inter-code interference) and improving characteristics while suppressing a division error resulting from the uncertainty of a replica occurring upon block division by adaptively setting the number of block divisions for each iterative process based on the uncertainty of a transmitted signal replica or the like will be described.

Since the configuration of the transmitter or receiver of the second embodiment is substantially the same as the configuration of the first transmitter 100 (FIG. 1) or the configuration of the receiver 200 (FIG. 3), description thereof is omitted. For the same parts of the second embodiment as those of the first embodiment, description thereof is omitted. Only the differences between the second embodiment and the first embodiment will be described.

The second embodiment is different from the first embodiment in terms of the process to be executed by the signal detection unit (FIG. 4) of the receiver (FIG. 3).

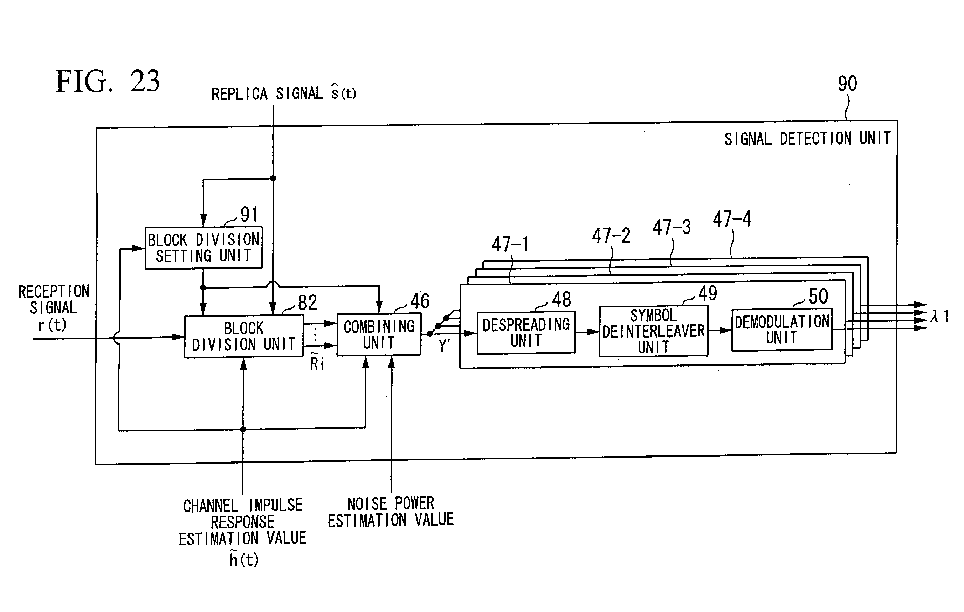

FIG. 23 is a schematic block diagram showing the configuration of the signal detection unit 90 of the receiver according to the second embodiment of the present invention. The input directed to a block division setting unit 91 of a signal detection unit 90 and a process thereof are different from those of the signal detection unit 23 of the receiver 200 (FIG. 3) according to the first embodiment.

A replica signal $s^{\wedge}(t)$ output from the replica signal generation unit 28 (FIG. 3) and a channel impulse response estimation value $h^{-}(t)$ output from the propagation path/noise power estimation unit 22 (FIG. 3) are input to the block division setting unit 91 used in this embodiment.

The block division setting unit 91 produces the uncertainty of a transmitted signal replica based on the input replica signal $s^{\wedge}(t)$ and the channel impulse response estimation value $h^{-}(t)$. Here, for example, the uncertainty of the transmitted signal replica can be produced based on reliability information of the replica signal as a method of producing the uncertainty of the transmitted signal replica. Here, the likelihood of the input replica signal may be used as the reliability information of the replica. That is, since the likelihood itself is a value indicating the accuracy of each bit (like the probability that the bit is 0 or 1), the uncertainty can be produced thereby.

The value obtained by subtracting the result of a convolution operation of the input replica signal and the channel impulse response estimation value from the received signal may be used as the reliability information of the replica. Thus, the total of division errors indicated by the dotted line of FIG. 15 may be produced.

A log-likelihood ratio output by the soft decision output unit or a log-likelihood ratio output by the error correction decoding unit may be used as a replica signal for producing the uncertainty of the transmitted signal replica.

The block division setting unit 91 sets a block division setting value based on the produced uncertainty of the transmitted signal replica and inputs the block division setting value to the block division unit 82. The block division unit 82 executes a block division process based on the input block division setting value. The above process is executed for each iterative process.

In the method of setting a block division setting value by the block division setting unit 91 for each iterative process, for example, the number of block divisions corresponding to the uncertainty of the transmitted signal replica may be preset. When the magnitude of the improvement of the uncertainty of the transmitted signal replica to be improved by the iterative process is less than a predetermined value, a method of changing the number of block divisions may be used.

The characteristics can be effectively improved in response to a division error or the like by adaptively setting the number of block divisions for each iterative process using a method described in the second embodiment.

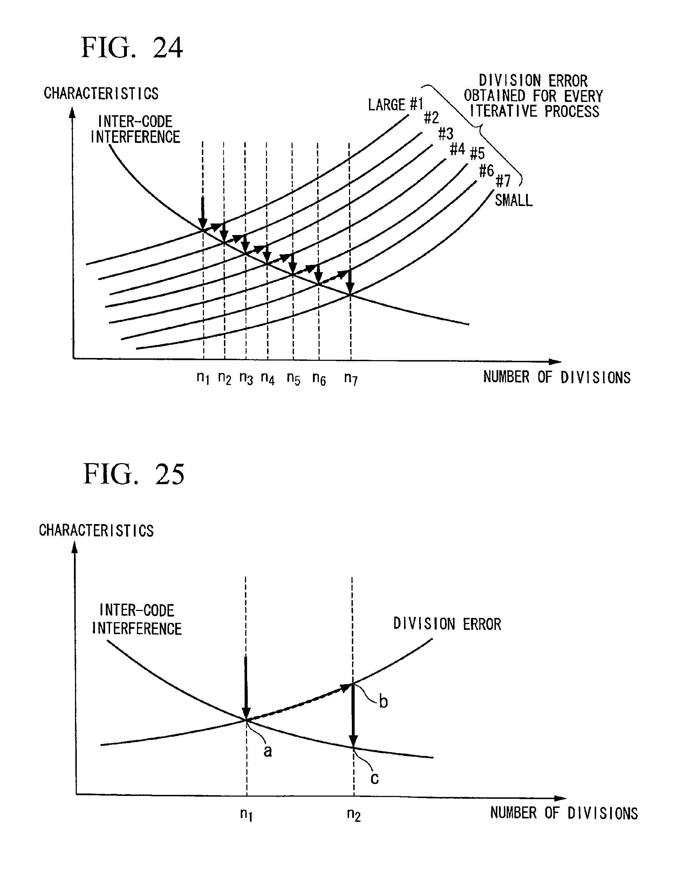

FIG. 24 is a diagram illustrating effects according to the second embodiment of the present invention. In FIG. 24, the horizontal axis represents number of divisions and the vertical axis represents characteristics. FIG. 24 shows the form of characteristics improvement when the appropriate number of block divisions is adaptively set for every iterative process based on a division error and inter-code interference obtained for every iterative process.

As shown in FIG. 24, the number of iterations is set to 7, the number of block divisions is set to $n_1$ to $n_7$ to be used for each iterative process, and the characteristics for the number of block divisions of the division error obtained for each iteration when the set number of block divisions is used is indicated by #1 to #7. The first iterative process is executed using the number of block divisions $n_1$. The number of block divisions is set in a second iterative process based on the division error of the first iterative process. Likewise, a subsequent iterative process is executed.

In the description of FIG. 24, the characteristics is improved by setting the number of block divisions to be large so that the uncertainty of the transmitted signal replica is small for each iterative process and the division error is small, and it is not limited thereto. For example, the number of block divisions may be set to be small when the division error is large as compared with the division error of an iterative process before one round by executing the iterative process.

(Third Embodiment)

Next, the third embodiment of the present invention will be described. In this embodiment, a method of setting the number of block divisions in the case where the number of block divisions is adaptively set for every iterative process will be described.

Since the configuration of the transmitter or the receiver of the third embodiment is substantially the same as the configuration of the first transmitter 100 (FIG. 1) or the configuration of the receiver 200 (FIG. 3) and the signal detection unit of the receiver of the third embodiment is substantially the same as the signal detection unit 90 (FIG. 23) according to the second embodiment, description thereof is omitted. For the same parts of the third embodiment as those of the first or second embodiment, description thereof is omitted. Only the differences between the third embodiment and the first or second embodiment will be described.

The third embodiment is different from the second embodiment in terms of the process to be executed by the signal detection unit 90 (FIG. 23) of the receiver.
In this embodiment, the block division setting unit 91 sets the number of block divisions based on the magnitude of the characteristics improvement expected by each iterative process.

FIG. 25 is a diagram showing an example of a method of setting the number of block divisions according to the third embodiment of the present invention. The case where the characteristics is improved to point a by the number of block divisions $n_1$ in a certain iterative process and the number of block divisions to be used by the next iterative process is set will be described with reference to FIG. 25.
First, the division error at point a is produced based on the uncertainty of a transmitted signal replica produced by the block division setting unit 91. The number of block divisions is set so that the magnitude of the expected characteristics improvement is set to be a predetermined value based on characteristics and inter-code interference for block division of the next produced division error.

For example, as shown in FIG. 25, assuming that the number of block divisions to be used in the next iterative process is set to $n_2$, the characteristics becomes point b when the number of block divisions is $n_2$ in the division error obtained at point a. The characteristics is improved from point b to point c by the iterative process. That is, the magnitude of the expected characteristics improvement is between point b and point c in the next iterative process when the number of block divisions $n_2$ is used.
The magnitude of the expected characteristics improvement may be between point b and point c, and the magnitude of the expected characteristics improvement may be between point a and point c. For example, when the number of divisions in the next iterative process is set to $n_2$ at the time of point a, an expected improvement quantity is between point a and point c since the expected characteristics by inter-code interference for the number of block divisions at the time is point c.

The above-described predetermined value may be preset or may be produced based on the division error, inter-code interference, or the number of iterations, but it is not limited thereto. The number of block divisions may be set based on at least one of inter-symbol interference, inter-subcarrier interference, and a gain (division gain) obtained by block division such as a path diversity gain or the like in place of inter-code interference. For example, the gain by the block division can be obtained since interference is small as the number of block divisions is increased when each block exceeds a guard interval after block division in the case of inter-symbol interference or inter-subcarrier interference. The path diversity gain can be obtained by combining the results of blocks in the combining unit since the arrival path is finely separated as the number of block divisions is increased. The magnitude of the expected characteristics improvement may be produced by a EXIT (EXtrinsic Information Transfer) chart.

Since the optimal number of block divisions can be selected by employing the third embodiment, characteristics can be more effectively improved. The configuration of this embodiment is applicable as the configuration of the first embodiment. That is, in this embodiment, a method of setting the number of block divisions in the case where the number of block divisions is adaptively set for every iterative process has been described, but the case of setting all values of the number of block divisions before a block division process may be used as the standard of setting the number of block divisions.

In the above-described embodiment, a control process of the transmitter 100 (FIG. 1) or the receiver 200 (FIG. 3) may be executed by recording a program for implementing a function of the transmitter 100 or the receiver 200 on a computer readable recording medium and enabling a computer system to read and execute the program recorded on the recoding medium. The computer system used herein includes an OS and hardware, such as peripheral devices.

The "computer readable recording medium" is a portable medium such as a flexible disc, magneto-optical disc, ROM and CD-ROM, and a storage device, such as a hard disk, built in the computer system. Furthermore, the "computer readable recording medium" may also include a medium that dynamically holds a program for a short period of time, such as a communication line when a program is transmitted via a network such as the Internet or a communication network such as a telephone network, and a medium that holds a program for a fixed period of time, such as a volatile memory in a computer system serving as a server or client in the above situation. The program may be that for implementing part of the above functions, or the above functions may be implemented in combination with a program already recorded on the computer system.

The embodiments of the present invention have been described in detail with reference to the drawings. However, the specific configuration is not limited to the embodiments and may include any design in the scope without departing from the subject matter of the present invention.

Industrial applicability

The present invention is applicable to a receiver and a reception method capable of reducing the computational amount when the receiver demodulates a signal received from a transmitter.

**Claims**

1. A receiver comprising:

   a propagation path estimation unit which produces a channel impulse response estimation value from a received signal;
   a replica signal creation unit which creates a replica signal as a replica of a transmitted signal based on the received signal;
   a time period setting unit which sets time periods into which a channel impulse response estimation value is divided;
   a received signal extraction unit which extracts received signals of the time periods set by the time period setting unit using the replica signal created by the replica signal creation unit;
   a combining unit which iterates a process for combining the signals of the time periods extracted by the received signal extraction unit; and
   a demodulation processing unit which performs a demodulation process for the signals combined by the combining unit,
   wherein the number of time periods set in at least one iterative process is different.

2. The receiver according to Claim 1,
   wherein the received signal extraction unit includes:

   an arrival wave replica generation unit which generates a replica of an arrival wave of each time period based on the channel impulse response estimation value as a propagation path of the received signal, the replica signal created by the replica signal creation unit, and the time periods set by the time period setting unit; and
   a subtraction unit which extracts a received signal of a time period set by the time period setting unit by subtracting the replica of the arrival wave of each time period generated by the arrival wave replica generation unit from the received signal.

3. The receiver according to Claim 1,
   wherein the time period setting unit sets the number of time periods to be invariable or increased as the number of iterative processes is increased.

4. The receiver according to Claim 1,
   wherein the time period setting unit sets the number of time periods based on the channel impulse response estimation value.

5. The receiver according to Claim 1,
   wherein the time period setting unit sets the number of time periods to be adaptive for every iterative process.

6. The receiver according to Claim 5,
   wherein the time period setting unit sets the number of time periods based on a likelihood of the replica signal created by the replica signal creation unit.

7. The receiver according to Claim 5,
   wherein the time period setting unit sets the number of time periods based on reliability information of the replica signal created by the replica signal creation unit.

8. The receiver according to Claim 7,
   wherein the reliability information is a division error produced from the replica signal created by the replica signal creation unit, the channel impulse response estimation value, and the received signal.

9. The receiver according to Claim 8,
wherein the time period setting unit sets the number of time periods based on the division error and a division gain.

10. The receiver according to Claim 9,
wherein the division gain is determined based on at least one of inter-symbol interference, inter-subcarrier interference, and a path diversity gain.

11. The receiver according to Claim 9, further comprising:

a despreading unit which separates a code multiplexed signal,
wherein the division gain is determined based on at least one of inter-code interference, inter-symbol interference, inter-subcarrier interference, and a path diversity gain.

12. A reception method comprising:

a propagation path estimation step in which a channel impulse response estimation value is produced from a received signal;
a replica signal creation step in which a replica signal is created as a replica of a transmitted signal based on the received signal;
a time period setting step in which time periods into which the channel impulse response estimation value is divided are set;
a received signal extraction step in which received signals of the time periods set by the time period setting step are extracted using the replica signal created by the replica signal creation step;
a combining step in which a process for combining the signals of the time periods extracted by the received signal extraction step is iterated; and
a demodulation processing step in which a demodulation process for the signals combined by the combining step is executed,
wherein the number of time periods set in at least one iterative process is different.

# FIG. 1

**100**

**TRANSMITTER**

| 70 | 1 |
|---|---|
| MAC UNIT | S/P CONVERSION UNIT |

2-1  2-2  2-3  2-4

**3** ERROR CORRECTION CODING UNIT → **4** BIT INTERLEAVER UNIT

**5** MODULATION UNIT → **6** SYMBOL INTERLEAVER UNIT → **7** FREQUENCY-TIME SPREADING UNIT

**8** DTCH MULTIPLEXING UNIT → **9** PICH MULTIPLEXING UNIT → **10** SCRAMBLING UNIT

**11** IFFT UNIT → **12** GI INSERTION UNIT → **71** FILTERING PROCESSING UNIT → **72** D/A CONVERSION UNIT → **73** FREQUENCY CONVERSION UNIT → **74** TRANSMISSION ANTENNA

FIG. 2

FIG. 3

FIG. 3

RECEIVER 28 200

REPLICA SIGNAL GENERATION UNIT

29-1  29-2  29-3  29-4

38 GI INSERTION UNIT ← 37 IFFT UNIT ← 36 SCRAMBLING UNIT

31 SYMBOL GENERATION UNIT ← 30 BIT INTERLEAVER UNIT

$\lambda 2$  27  24-1  24-2  24-3  24-4

35 PICH MULTIPLEXING UNIT ← 34 DTCH MULTIPLEXING UNIT ← 33 FREQUENCY-TIME SPREADING UNIT ← 32 SYMBOL INTERLEAVER UNIT

$\hat{s}(t)$

23 SIGNAL DETECTION UNIT  $\lambda 1$

25 BIT DEINTERLEAVER UNIT

26 ERROR CORRECTION DECODING UNIT

39 P/S CONVERSION UNIT

$r(t)$

21 SYMBOL SYNCHRONIZATION UNIT

22 PROPAGATION PATH/NOISE POWER ESTIMATION UNIT

75 RECEPTION ANTENNA → 76 FREQUENCY CONVERSION UNIT → 77 A/D CONVERSION UNIT

EP 2 204 933 A1

FIG. 4

REPLICA SIGNAL $\hat{s}(t)$

SIGNAL DETECTION UNIT 23

81 BLOCK DIVISION SETTING UNIT

RECEIVED SIGNAL $r(t)$

82 BLOCK DIVISION UNIT

$\tilde{R}i$

46 COMBINING UNIT

Y'

47-1 47-2 47-3 47-4

48 DESPREADING UNIT

49 SYMBOL DEINTERLEAVER UNIT

50 DEMODULATION UNIT

$\lambda 1$

CHANNEL IMPULSE RESPONSE ESTIMATION VALUE $\tilde{h}(t)$

NOISE POWER ESTIMATION VALUE

# FIG. 5

BLOCK DIVISION
SETTING VALUE    REPLICA SIGNAL $\hat{s}(t)$    82

BLOCK DIVISION UNIT

45-1    45-B

41
ARRIVAL WAVE
REPLICA GENERATION
UNIT

43    44
r(t)    GI
REMOVAL    FFT
UNIT    UNIT    $\tilde{R}_i$

42

CHANNEL IMPULSE RESPONSE ESTIMATION VALUE $\tilde{h}(t)$

## FIG. 6

START

S1 FIRST ROUND?

NO: PROCESS UPON ITERATION

YES: FIRST ROUND PROCESS

S2 GI REMOVAL

S3 FFT

S4 MMSE FILTER PROCESS (GENERAL PROCESS)

$C_{mux}$ ITERATIONS

S5 DESPREADING PROCESS

S6 SYMBOL DEINTERLEAVER

S7 SOFT DECISION BIT (LLR) OUTPUT

S8 BIT DEINTERLEAVER

S9 ERROR CORRECTION DECODING

S10 HAVE PREDETERMINED NUMBER OF ITERATIONS BEEN PREFORMED ?

NO

YES

END

B ITERATIONS

S20 REMOVAL OF OTHERS EXCLUDING PREDETERMINED ARRIVAL WAVE

S21 GI REMOVAL

S22 FFT

S23 MMSE FILTER PROCESS (MMSE COMBINING OF B OUTPUTS)

S19 GI INSERTION

S18 IFFT

S17 SCRAMBLING

S16 PICH MULTIPLEXING

S15 DTCH MULTIPLEXING

S14 SPREADING PROCESS

S13 SYMBOL INTERLEAVER

S12 MODULATED SIGNAL REPLICA CREATION

S11 BIT INTERLEAVING OF LOG-LIKELIHOOD RATIO(LLR)

$C_{mux}$ ITERATIONS

FIG. 7

FIG. 8

# FIG. 9

# FIG. 10

FIG. 11

RECEPTION POWER

P1 P2 P3 P4
P5
P6

TIME

(a)

RECEPTION POWER

FREQUENCY

(b)

COMBINING UNIT ⌐46

(c)

FIG. 12

RECEPTION POWER — P1 P2 P3 P4 P5 P6 — TIME (a) ⟺ RECEPTION POWER — FREQUENCY (b)

RECEPTION POWER — P1 P2 P3 P4 P5 P6 — TIME (c) ⟺ RECEPTION POWER — FREQUENCY (d)

RECEPTION POWER — P1 P2 P3 P4 P5 P6 — TIME (e) ⟺ RECEPTION POWER — FREQUENCY (f)

COMBINING UNIT 46

(g)

FIG. 13

EP 2 204 933 A1

# FIG. 14

(a)

(b)

BLOCK B11

NUMBER OF ITERATIONS: 1
NUMBER OF DIVISIONS: 1

(c)

BLOCK B21   BLOCK B22   BLOCK B23

NUMBER OF ITERATIONS: 2
NUMBER OF DIVISIONS: 3

(d)

BLOCK B31 BLOCK B32 BLOCK B33 BLOCK B34 BLOCK B35 BLOCK B36

NUMBER OF ITERATIONS: 3
NUMBER OF DIVISIONS: 6

# FIG. 15

(a)

BLOCK B21    BLOCK B22    BLOCK B23

P101
P102 P103
P104

P105
P106
P107 P108

P109
P110
P111 P112

TIME

DIVISION ERROR

(b)

BLOCK B21    BLOCK B22    BLOCK B23

P105
P106 P107
P108

P101
P102
P103 P104

P109
P110
P111 P112

TIME

DIVISION ERROR                DIVISION ERROR

(c)

BLOCK B21    BLOCK B22    BLOCK B23

P101
P102
P103 P104

P105
P106
P107 P108

P109
P110 P111
P112

TIME

DIVISION ERROR

EP 2 204 933 A1

FIG. 16

(a)

BLOCK B21    BLOCK B22    BLOCK B23

P101
P102 P103
P104

P105
P106
P107
P108

P109
P110
P111
P112

TIME

DIVISION ERROR

(b)

BLOCK   BLOCK   BLOCK   BLOCK   BLOCK   BLOCK
B31     B32     B33     B34     B35     B36

P101
P102

P103
P104

P105
P106

P107
P108

P109
P110

P111
P112

TIME

DIVISION ERROR

37

FIG. 17

FIG. 18

# FIG. 19

# FIG. 20

# FIG. 21

| NUMBER OF ITERATIVE PROCESSES | 1 | 2 | 3 | 4 | 5 | 6 | 7 | 8 |
|---|---|---|---|---|---|---|---|---|
| NUMBER OF BLOCK DIVISIONS | 1 | 3 | 3 | 4 | 4 | 6 | 6 | 6 |

# FIG. 22

| | |
|---|---|
| NUMBER OF SUBCARRIERS | 768 |
| SPREADING RATE (FREQUENCY DIRECTION×TIME DIRECTION) | 16 × 1 |
| SPREADING CODE | WALSH-HADAMARD CODE |
| NUMBER OF CODE MULTIPLEXING | 12 |
| MODULATION SCHEME | QPSK |
| ERROR CORRECTION CODE | TURBO CODE |
| CODING RATE | 3/4 |
| CONSTRAINT LENGTH | 4 |
| PACKET LENGTH | 3456 bits |
| MAP DECODING | Max-log-MAP |
| PROPAGATION PATH | 12-PATH EXPONENTIALLY-DECAYED RAYLEIGH FADING CHANNEL |
| GUARD INTERVAL LENGTH | 1.674 $\mu$s |
| DELAY SPREAD | 1.61 $\mu$s |
| BLOCK DIVISION METHOD | ISOCHRONAL |
| NUMBER OF BLOCK DIVISIONS | 3 |

FIG. 23

REPLICA SIGNAL $\hat{s}$(t)

90

SIGNAL DETECTION UNIT

91
BLOCK DIVISION
SETTING UNIT

47-1    47-2    47-3    47-4

RECEPTION
SIGNAL
r(t)

82
BLOCK
DIVISION UNIT

46
COMBINING
UNIT

Y'

48
DESPREADING
UNIT

49
SYMBOL
DEINTERLEAVER
UNIT

50
DEMODULATION
UNIT

λ1

$\tilde{R}$i

CHANNEL IMPULSE
RESPONSE
ESTIMATION VALUE
$\tilde{h}$(t)

NOISE POWER
ESTIMATION VALUE

FIG. 24

CHARACTERISTICS

INTER-CODE
INTERFERENCE

DIVISION ERROR
OBTAINED FOR EVERY
ITERATIVE PROCESS

LARGE #1
#2
#3
#4 #5
#6 #7
SMALL

$n_1$ $n_2$ $n_3$ $n_4$ $n_5$ $n_6$ $n_7$        NUMBER OF DIVISIONS

FIG. 25

CHARACTERISTICS

INTER-CODE
INTERFERENCE

DIVISION ERROR

b

a

c

$n_1$        $n_2$        NUMBER OF DIVISIONS

FIG. 26

EP 2 204 933 A1

EP 2 204 933 A1

FIG. 27

(a)

- - L1

FREQUENCY

(b)

- - L2

FREQUENCY

44

# FIG. 28

(a)

FREQUENCY

SFfreq

(b)

$C_{8,1}$ | 1 | 1 | 1 | 1 | 1 | 1 | 1 | 1 |

$C_{8,2}$ | 1 | 1 | 1 | 1 | -1 | -1 | -1 | -1 |

ORTHOGONAL

$C_{8,7}$ | 1 | -1 | -1 | 1 | 1 | -1 | -1 | 1 |

# FIG. 29

3dB

FADING

FREQUENCY

SFfreq

| $C'_{8,1}$ | 0.5 | 0.5 | 0.5 | 0.5 | 0.5 | 0.5 | 0.5 | 0.5 |
| $C'_{8,2}$ | 0.5 | 0.5 | 0.5 | 0.5 | -0.5 | -0.5 | -0.5 | -0.5 |
| $C'_{8,7}$ | 0.5 | -0.5 | -0.5 | 0.5 | 0.5 | -0.5 | -0.5 | 0.5 |

DESPREAD

4
0
0

(a)

$C_{8,1}=[1,1,1,1,1,1,1,1]$

FADING

6dB

FREQUENCY

SFfreq

| $C''_{8,1}$ | 1 | 1 | 1 | 1 | 0.25 | 0.25 | 0.25 | 0.25 |
| $C''_{8,2}$ | 1 | 1 | 1 | 1 | -0.25 | -0.25 | -0.25 | -0.25 |
| $C''_{8,7}$ | 1 | -1 | -1 | 1 | 0.25 | -0.25 | -0.25 | 0.25 |

| 5 |
| 3 |
| 0 |

DESPREAD

(b)

$C_{8,1}=[1,1,1,1,1,1,1,1]$

46

<table>
<tr><td colspan="3" align="center">**INTERNATIONAL SEARCH REPORT**</td><td>International application No.</td></tr>
<tr><td colspan="3"></td><td>PCT/JP2008/066069</td></tr>
</table>

A. CLASSIFICATION OF SUBJECT MATTER
*H04J11/00*(2006.01)i, *H04B1/69*(2006.01)i

According to International Patent Classification (IPC) or to both national classification and IPC

B. FIELDS SEARCHED

Minimum documentation searched (classification system followed by classification symbols)
H04J11/00, H04B1/69

Documentation searched other than minimum documentation to the extent that such documents are included in the fields searched
| | | | |
|---|---|---|---|
| Jitsuyo Shinan Koho | 1922-1996 | Jitsuyo Shinan Toroku Koho | 1996-2008 |
| Kokai Jitsuyo Shinan Koho | 1971-2008 | Toroku Jitsuyo Shinan Koho | 1994-2008 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| P,A | WO 2007/136056 A1 (Sharp Corp.), 29 November, 2007 (29.11.07), Full text; all drawings (Family: none) | 1-12 |
| E,A | JP 2008-236065 A (Nippon Telegraph And Telephone Corp.), 02 October, 2008 (02.10.08), Par. Nos. [0027] to [0030], [0126] to [0144]; Figs. 3, 10 (Family: none) | 1-12 |
| A | JP 2007-158721 A (Sharp Corp.), 21 June, 2007 (21.06.07), Full text; all drawings (Family: none) | 1-12 |

[X] Further documents are listed in the continuation of Box C.        [ ] See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 02 December, 2008 (02.12.08) | 09 December, 2008 (09.12.08) |

| Name and mailing address of the ISA/ | Authorized officer |
|---|---|
| Japanese Patent Office | |
| Facsimile No. | Telephone No. |

Form PCT/ISA/210 (second sheet) (April 2007)

**INTERNATIONAL SEARCH REPORT**

| International application No. |
|---|
| PCT/JP2008/066069 |

C (Continuation).   DOCUMENTS CONSIDERED TO BE RELEVANT

| Category* | Citation of document, with indication, where appropriate, of the relevant passages | Relevant to claim No. |
|---|---|---|
| A | JP 2005-150839 A (NTT Docomo Inc.),<br>09 June, 2005 (09.06.05),<br>Full text; all drawings<br>& EP 1531592 A2        & US 2005/0129136 A1<br>& CN 1617534 A        & US 7415085 B2 | 1-12 |
| A | JP 2005-079911 A (Fujitsu Ltd.),<br>24 March, 2005 (24.03.05),<br>Full text; all drawings<br>(Family: none) | 1-12 |
| A | JP 2006-325063 A (Fujitsu Ltd.),<br>30 November, 2006 (30.11.06),<br>Full text; all drawings<br>& EP 1724980 A2        & US 2006/0262869 A1 | 1-12 |
| A | JP 2007-013584 A (NEC Corp.),<br>18 January, 2007 (18.01.07),<br>Full text; all drawings<br>& US 2007/0002985 A1 | 1-12 |
| A | JP 2007-006067 A (Toshiba Corp.),<br>11 January, 2007 (11.01.07),<br>Full text; all drawings<br>& EP 1737177 A2        & US 2006/0291375 A1<br>& CN 1885840 A | 1-12 |

Form PCT/ISA/210 (continuation of second sheet) (April 2007)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2007230589 A
- JP 2004221702 A
- JP 2005198223 A

### Non-patent literature cited in the description

- **Y. Zhou ; J. Wang ; M. Sawahashi.** Downlink Transmission of Broadband OFCDM Systems-Part I: Hybrid Detection. *IEEE Transaction on Communication,* May 2005, vol. 53 (4), 718-729